# EUROPEAN PATENT SPECIFICATION

(11) **EP 4 478 769 B1**
(45) Date of publication and mention of the grant of the patent: **02.12.2026**
(21) Application number: 22925946.0
(22) Date of filing: 10.02.2022
(51) Int. Cl.: H04W 16/28, H04B 7/06, H04B 7/022, H04B 7/024

(54) **COMMUNICATION CONTROL METHOD, COMMUNICATION CONTROL DEVICE, AND WIRELESS COMMUNICATION SYSTEM**
KOMMUNIKATIONSSTEUERUNGSVERFAHREN, KOMMUNIKATIONSSTEUERUNGSVORRICHTUNG UND DRAHTLOSKOMMUNIKATIONSSYSTEM
PROCÉDÉ DE COMMANDE DE COMMUNICATION, DISPOSITIF DE COMMANDE DE COMMUNICATION ET SYSTÈME DE COMMUNICATION SANS FIL

(43) Date of publication of application: 18.12.2024
(73) Proprietor: NTT, Inc., Tokyo 100-8116 (JP)
(72) Inventor: WAI, Shuki, Musashino-shi, Tokyo 180-8585 (JP); IWAKUNI, Tatsuhiko, Musashino-shi, Tokyo 180-8585 (JP); UCHIDA, Daisei, Musashino-shi, Tokyo 180-8585 (JP); ARAI, Takuto, Musashino-shi, Tokyo 180-8585 (JP); KITA, Naoki, Musashino-shi, Tokyo 180-8585 (JP)
(74) Representative: Santarelli
(86) International application number: PCT/JP2022/005501
(87) International publication number: WO 2023/152925

(56) References cited:
- US-A1- 2017 257 780
- SHUKI WAI ET AL: "A New Beam Search Based on Combination History of Selected Beams among Antennas for Distributed Antenna System", vol. 121, no. 210 (RCS2021-123), 14 October 2021 (2021-10-14), pages 31 - 36, XP009553077, Retrieved from the Internet <URL:https://ken.ieice.org/ken/paper/202110214CfQ/eng/> [retrieved on 20211014]
- WAI, SHUKI; IWAKUNI, TATSUHIKO; ARAI, TAKUTO; UCHIDA, DAISEI; KITA, NAOKI: "B-5-66 Method for reducing the number of beam searches for non-regenerative wireless relay stations in high frequency band distributed MIMO systems", IEICE 2021 GENERAL CONFERENCE PROCEEDINGS COMMUNICATION 1; MARCH 9-12, 2021, IEICE, JP, 23 February 2021 (2021-02-23) - 12 March 2021 (2021-03-12), JP, pages 342, XP009548680

## Description

### [Technical Field]

The present invention relates to a communication control method, a communication control device, and a wireless communication system.

### [Background Art]

### (Beamforming in high-frequency band)

In high-frequency bands such as millimeter-wave bands and terahertz bands, free-space propagation loss is greater than in low-frequency bands such as microwave bands. Therefore, in order to compensate for this loss, it is necessary to use a beamforming technique in which a beam that concentrates power in a specific direction is formed (see, for example, NPL 1).

In the case of point-to-point (P-P) type communication where the combination of wireless stations that always communicate is fixed, and the positional relationship of the wireless stations and the propagation environment around the wireless stations do not change, the beam forming direction can be determined in advance to perform beamforming fixedly, for example, when a wireless station is installed. On the other hand, in the case of point-to-multi point (P-MP) type communication accommodating a plurality of wireless stations, or in the case where at least one of the wireless stations moves, the beamforming cannot be performed fixedly. In this case, it is necessary to perform adaptive beamforming in which the beam forming direction is adaptively controlled according to the location of a wireless station that requires communication among a plurality of wireless stations, the movement of the wireless station, and changes in the propagation environment around the wireless station.

Adaptive beamforming is generally performed by adjusting the phase relationship of radio waves radiated between a plurality of antenna elements to control the beam forming direction without using a mechanical drive unit. However, in order to appropriately adjust the phase relationship, it is necessary to derive an appropriate phase relationship after grasping the phase relationship between the antenna elements of both wireless stations on the transmitting side and the receiving side. That is, it is necessary to know the state of the propagation path between the antenna elements of both wireless stations on the transmitting side and receiving side for all combinations of antenna elements.

The state of the propagation path can be found by transmitting and receiving known signals between the transmitting-side wireless station and the receiving-side wireless station. However, since no other communication can be performed during the transmission and reception and it is necessary to accurately transmit the state of the propagation path from the receiving-side wireless station to the transmitting-side wireless station, communication overhead increases.

In order to suppress the increase in overhead, adaptive beamforming uses a technique in which a signal containing a beam identifier (hereinafter referred to as a beam identifier (ID)) associated with a plurality of candidate beams that are set discretely in advance is transmitted with each candidate beam and the beam ID of the beam determined to be most suitable for communication from among these beams is selected. This technique has been specified as a specification for wireless communication systems that have been put into practical use in recent years, such as 3GPP 5th Generation (5G) and IEEE802.11ad, and is also being implemented (for example, see NPL 1, 2, and 3).

### (Beam selection procedure)

When selecting a transmitting-side beam of a wireless station, the transmitting-side wireless station transmits a signal that allows the receiving-side wireless station to uniquely identify each beam used for transmission. An example of such a signal is a beam search signal in which the beam ID of a beam used for transmission is embedded as digital information. The transmitting-side wireless station transmits beams carrying beam search signals in which different beam IDs are embedded while temporally switching the directions of the beams. The receiving-side wireless station receives a plurality of beams, reads the beam ID included in the beam search signal of each of the plurality of received beams, measures the reception quality of each beam, and determines which transmitting-side beam has the best reception quality. The receiving-side wireless station transmits a feedback signal to the transmitting-side wireless station that allows the transmitting-side wireless station to uniquely identify the beam ID of the transmitting-side beam with the best reception quality, whereby the transmitting-side wireless station can select the transmitting-side beam.

Regarding selection of a receiving-side beam of a wireless station, in a system such as time division duplex (TDD), which uses the same frequency for transmission and reception, it is also possible to select the same beam as that on the transmitting side. On the other hand, in systems such as frequency division duplex (FDD) that use different frequencies for transmission and reception, it is necessary to perform beam selection for the receiving-side beam in the same manner as for the selection of the transmitting-side beam. When selecting a receiving-side beam of a wireless station, the receiving-side wireless station transmits a signal requesting a receiving-side beam search procedure to the transmitting-side wireless station. The receiving-side wireless station receives the signal transmitted by the transmitting-side wireless station while temporally switching the direction according to the signal and measures the reception quality of the received signal. In this way, the receiving-side wireless station can select the receiving-side beam by determining which receiving-side beam has the best reception quality.

### (Distributed antenna system)

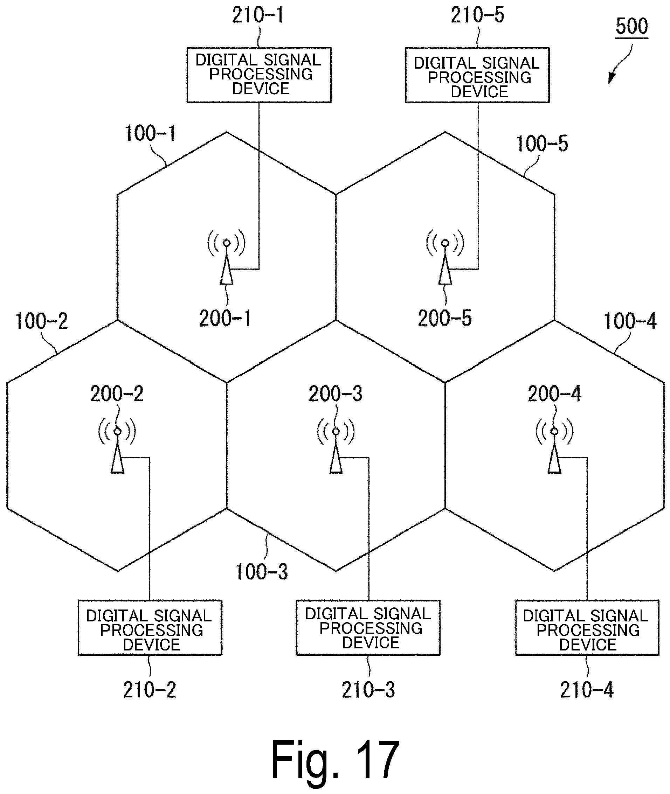

Fig. 17 is a diagram showing the configuration of a wireless communication system 500, which is an example of a conventional general wireless communication system. Fig. 17 shows, as an example, a configuration in which five cells 100-1 to 100-5 exist in the wireless communication system 500. The wireless communication system 500 has a configuration in which one antenna is installed for one cell. That is, the wireless communication system 500 is configured by installing antenna devices 200-1 to 200-5 in the cells 100-1 to 100-5, respectively. The antenna devices 200-1 to 200-5 are connected to digital signal processing devices 210-1 to 210-5, respectively, that transmit and receive signals. Regarding the cell 100-1, the antenna device 200-1 and the digital signal processing device 210-1 become a so-called base station device. When one terminal station is located in the cell 100-1, for example, the terminal station will be connected by radio waves from one antenna device 200-1.

Here, as described above, in high-frequency bands such as the millimeter-wave band and the terahertz band, since the beamforming technique is used, the influence of reflected waves and diffracted waves is reduced. Therefore, in high-frequency bands, there is a high possibility that communication will be interrupted if the beam is blocked, and line-of-sight communication becomes the basis. Incidentally, there is a technique called multiple input multiple output (MIMO) that is a powerful spatial multiplexing technique. MIMO is a technique that uses a plurality of antennas for transmission and reception, increasing the transmission speed by the maximum number of antennas through spatial multiplexing using the same frequency resources at the same time. However, since line-of-sight communication is the basis in high-frequency bands, when the MIMO technique is applied, the spatial correlation between a plurality of transmitting and receiving antennas becomes high, making spatial multiplexing difficult.

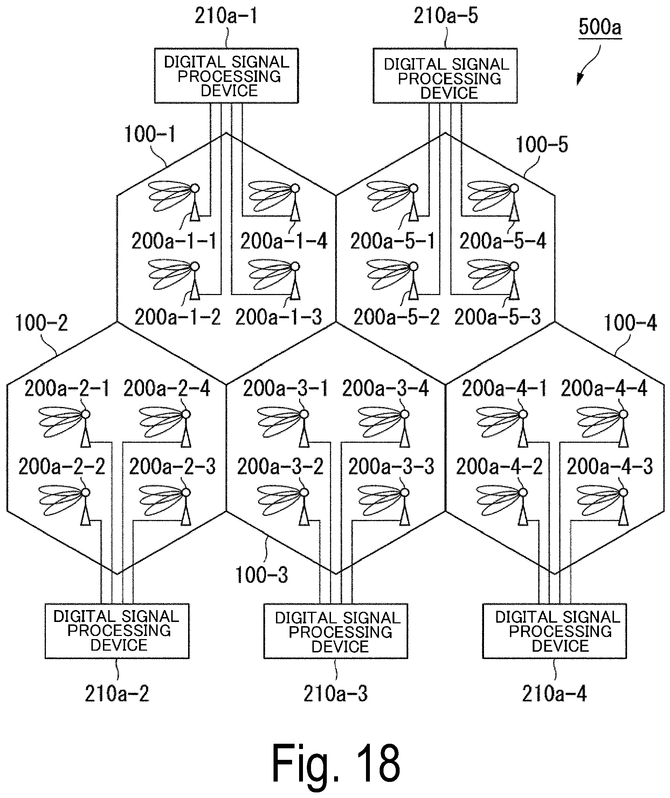

Therefore, distributed antenna systems that have the effect of improving shielding resistance and reducing spatial correlation in high-frequency bands are being studied (see, for example, NPL 4 and 5). Fig. 18 is a diagram showing the configuration of a wireless communication system 500a, which is an example of a high-frequency band distributed antenna system. Similarly to the wireless communication system 500 in Fig. 17, the wireless communication system 500a includes five cells 100-1 to 100-5. However, unlike the wireless communication system 500, the wireless communication system 500a has a configuration in which a plurality of antennas are distributed and installed in one cell. Hereinafter, each of the plurality of antennas installed in a distributed manner will be referred to as a distributed antenna. Regarding the cell 100-1, distributed antenna devices 200a-1-1 to 200a-1-4 each having one distributed antenna are installed in a distributed manner, and distributed antenna devices 200a-1-1 to 200a-1-4 are connected to one digital signal processing device 210a-1. In the wireless communication system 500a, the distributed antenna devices 200a-1-1 to 200a-1-4 and the digital signal processing device 210a-1 become a so-called base station device, and the cells 100-2 to 100-5 have a similar configuration. In the wireless communication system 500a, when one terminal station is located in the cell 100-1, for example, the terminal station will be connected by the radio waves from the plurality of distributed antenna devices 200a-1-1 to 200a-1-4.

### (Beam selection procedure in distributed antenna)

Spatial correlation is reduced and spatial multiplexing becomes possible by applying MIMO, that is, single-user MIMO, between a wireless station equipped with a plurality of antennas installed in a distributed manner, that is, distributed antennas, and one terminal station equipped with a plurality of antennas. However, it is essential to select a beam in advance in the link between each of the plurality of antennas of the wireless station and each of the plurality of antennas of the terminal station. Note that in the following description, MIMO between a wireless station equipped with distributed antennas and a terminal station equipped with a plurality of antennas is referred to as distributed MIMO.

Here, a general transmission beam selection method for performing distributed MIMO in high-frequency bands will be explained. A plurality of beam search signals in which a beam ID associated with each of a plurality of candidate beams that are discretely set in advance for each of a plurality of transmitting antennas of a wireless station and an antenna ID associated with each of a plurality of transmitting antennas are embedded as digital information are generated for each combination of a beam ID and an antenna ID. Each of the plurality of generated beam search signals is transmitted while being carried on a transmission beam that a transmitting antenna corresponding to an antenna ID included in each beam search signal transmits while temporally switching the same and that corresponds to a beam ID included in each beam search signal.

A terminal station serving as a communication partner receives a plurality of beams using each of a plurality of receiving antennas, reads a beam ID and a transmitting antenna ID included in a beam search signal of each of the plurality of received beams, and measures the reception quality of the received beam. The terminal station selects the beam ID with the best reception quality for each transmitting antenna ID, and feeds back, to the transmitting-side wireless station, data which is a combination of the transmitting antenna ID, the beam ID selected for the transmitting antenna ID, and the reception quality corresponding to the beam ID. The wireless station that has received this feedback selects a plurality of transmission beams corresponding to the number of spatial multiplexings by MIMO based on the reception quality. In addition to this, the terminal station on the communication partner side sequentially selects a plurality of reception beams by receiving-side beam selection. This enables MIMO transmission and reception between a plurality of transmission and reception beams in high-frequency bands.

It is assumed that distributed MIMO is applied to the wireless communication system 500a shown in Fig. 18. For example, when one terminal station is located in the cell 100-1, each of the plurality of distributed antenna devices 200a-1-1 to 200a-1-4 located in the cell 100-1 needs to perform a beam search to transmit a beam search signal to the terminal station, and select the beam with the best reception quality from among the plurality of beams obtained through the beam search. Therefore, in the wireless communication system 500a, overhead increases due to beam searches for the number of distributed antenna devices 200a-1-1 to 200a-1-4, and data transmission efficiency decreases. In other words, the problem is that increasing the number of distributed antenna devices 200a-1-1 to 200a-1-4 increases overhead.

To deal with this problem of increasing overhead, for example, a method of storing beam combinations selected for each of a plurality of distributed antennas and reducing the number of beam searches based on a history of beam combinations has been proposed in NPL 6.

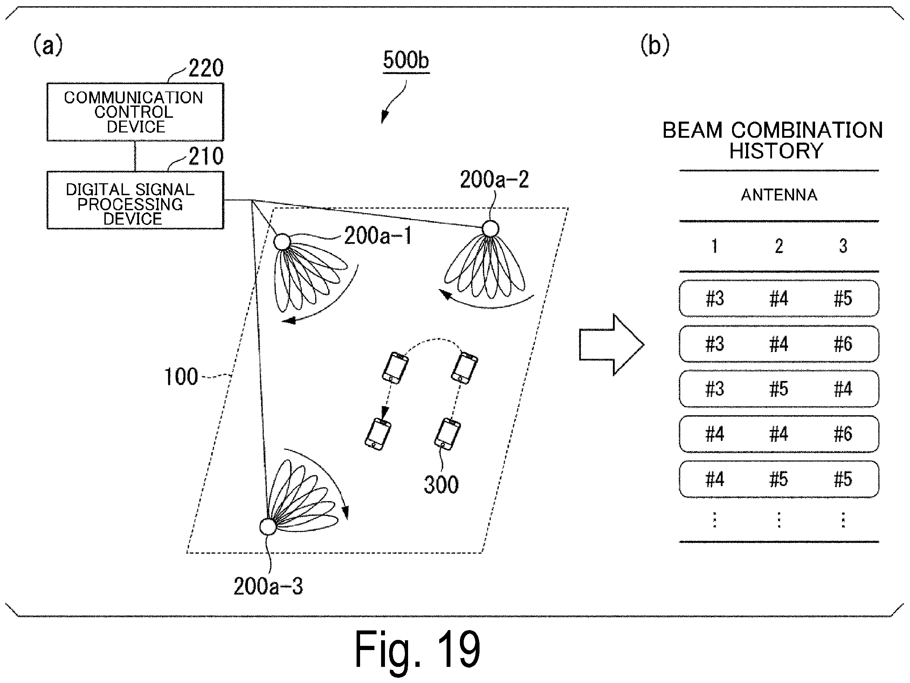

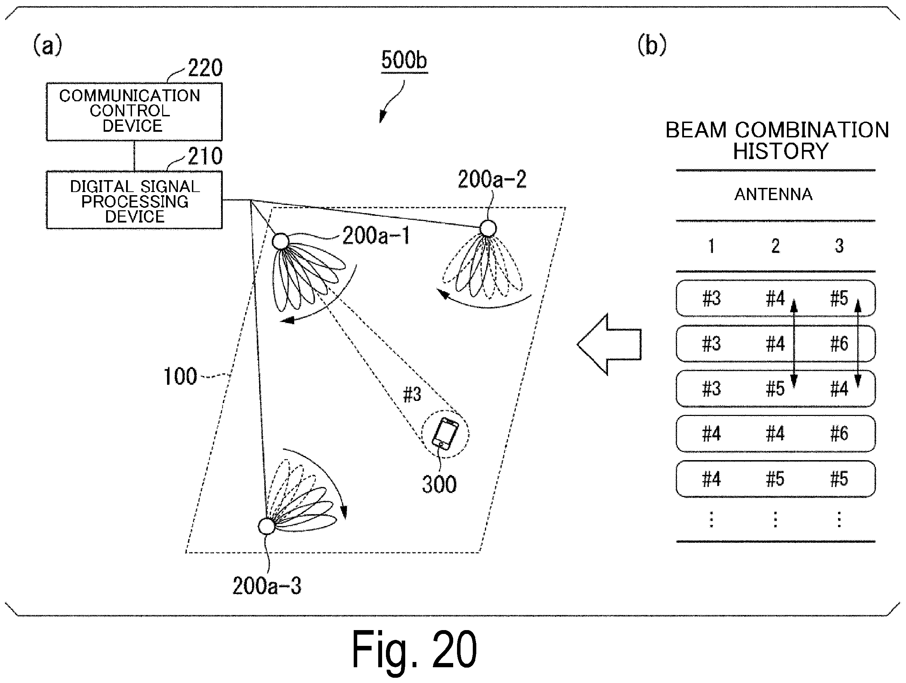

Figs. 19 and 20 are diagrams showing an outline of the technique disclosed in NPL 6. A wireless communication system 500b shown in Fig. 19(a) includes a cell 100 corresponding to any one of the cells 100-1 to 100-5 in the wireless communication system 500a shown in Fig. 18. In the cell 100, three distributed antenna devices 200a-1 to 200a-3 are installed in a distributed manner, and one digital signal processing device 210 is connected to the distributed antenna devices 200a-1 to 200a-3. A communication control device 220 stores a history of beam combinations selected for the plurality of distributed antenna devices 200a-1 to 200a-3. The communication control device 220 is a device that executes a method of reducing the number of beam searches based on the history of beam combinations, and is connected to the digital signal processing device 210. In the cell 100, there is one terminal device 300, which corresponds to the above-described terminal station, and moves within the cell 100.

In the high-frequency bands, a small number of paths centered on line-of-sight waves become dominant due to the large free-space propagation loss and diffraction loss and the use of beamforming. For this reason, the beam combinations that each of the distributed antenna devices 200a-1 to 200a-3 selects for distributed MIMO are limited at each location of the terminal device 300. Therefore, any one of the distributed antenna devices 200a-1 to 200a-3 transmits a beam carrying a beam search signal in all transmittable directions. Other beams of the distributed antenna devices 200a-1 to 200a-3 selected in the past in combination with one beam selected based on the beam search signal are set as candidate beams, and a partial beam search is performed only on the candidate beams. This allows the number of beam searches to be reduced. In order to perform this process of reducing the number of beam searches, the communication control device 220 performs processing in two types of modes including a storage mode of storing beam combinations selected for the distributed antenna devices 200a-1 to 200a-3, and a reference mode of reducing the number of beam searches based on a history of beam combinations. Fig. 19 is a diagram showing an outline of processing in the storage mode, and Fig. 20 is a diagram showing an outline of processing in the reference mode.

In the storage mode, the communication control device 220 instructs the digital signal processing device 210 to transmit beams carrying beam search signals to each of the distributed antenna devices 200a-1 to 200a-3 in all directions in which each distributed antenna device can perform transmission. When the terminal device 300 receives each beam carrying a beam search signal transmitted by each of the distributed antenna devices 200a-1 to 200a-3, the terminal device 300 reads the beam ID included in the beam search signal and measures the reception quality of the beam. The terminal device 300 determines which beam has the best reception quality for each of the distributed antenna devices 200a-1 to 200a-3 based on the value indicating the measured reception quality, and transmits a feedback signal enabling the communication control device 220 to uniquely identify the beam ID with the best reception quality.

When the communication control device 220 acquires the feedback signal through the distributed antenna devices 200a-1 to 200a-3 and the digital signal processing device 210, the communication control device 220 generates a record in a beam combination history table shown in Fig. 19(b) based on the acquired feedback signal. In the table shown in Fig. 19(b), "1" under the item "antenna" indicates the distributed antenna device 200a-1, "2" indicates the distributed antenna device 200a-2, and "3" indicates the distributed antenna device 200a-3. Numbers with "#" in the table indicate beam IDs. For example, the record in the first row indicates that beams with the beam IDs "#3", "#4", and "#5" are selected as the best beams for the distributed antenna devices 200a-1 to 200a-3, respectively. When the communication control device 220 repeatedly performs storage mode processing while the terminal device 300 moves within the cell 100, records of different combinations are added to the beam combination history table in the row direction.

In the reference mode, for example, as shown in Fig. 20(a), the communication control device 220 instructs the digital signal processing device 210 to transmit beams carrying beam search signals to the distributed antenna device 200a-1 in all transmittable directions. As a result, it is assumed that the beam with the beam ID "#3" is selected as the best beam for the distributed antenna device 200a-1. In this case, the communication control device 220 uses the beam with the beam ID "#3" of the distributed antenna device 200a-1 as a detection reference beam, and detects the beam IDs "#4" and "#5" indicating beams of distributed antenna device 200a-2 that have been selected in combination with the detection reference beam in the beam combination history table as the beam IDs indicating candidate beams as shown in Fig. 20(b). The communication control device 220 detects beam IDs "#4", "#5", and "#6" indicating the beams of the distributed antenna device 200a-3 that have been selected in combination with the detection reference beam as beam IDs indicating the candidate beams. The communication control device 220 instructs the digital signal processing device 210 to transmit beams of beam search signals to the distributed antenna device 200a-2 in directions corresponding to the beam IDs "#4" and "#5". The communication control device 220 instructs the digital signal processing device 210 to transmit beams of beam search signals to the distributed antenna device 200a-3 in the directions corresponding to the beam IDs "#4", "#5", and "#6". In this way, since beam searches are performed partially by narrowing down to candidate beams without performing beam searches in all directions in which the distributed antenna devices 200a-2 and 200a-3 can perform transmission, the number of beam searches can be reduced.

### [Citation List]

### [Non Patent Literature]

[NPL 1] Satoshi Suyama et al., "5G multi-antenna technology", NTT DOCOMO Technical Journal, Vol. 23, No. 4, pp. 30-39, January 2016
[NPL 2] Kazuaki Takeda et al., "Study status regarding physical layer element technique and high-frequency band utilization in 5G", NTT DOCOMO Technical Journal, Vol. 25, No. 3, pp. 23-32, October 2017
[NPL 3] Koji Takinami et al., "Standardization trends and element technologies for millimeter-wave wireless LAN systems", IEICE Communication Society Magazine, No. 38 Autumn, pp. 100-106, 2016
[NPL 4] Uchida Daisei et al., "A Study of High-frequency band Distributed Antenna System in High Terminal Density and Shielded Environments", IEICE General Conference Telecommunications Conference Proceedings 1, B-5-87, p. 375, March 2020
[NPL 5] Masashi Iwabuchi et al., "Proposal of high-frequency band multi-path formation control using a large number of diverse relay systems", IEICE General Conference Telecommunications Conference Proceedings 1, B-5-101, p. 389, March 2020
[NPL 6] Shuki Wai et al., "A method for reducing number of searches based on beam combination history in high-frequency band distributed antenna system", IEICE Technical Report, vol. 121, No. 210, RCS2021-123, pp. 31-36, October 2021
[NPL 7] Shuki Wai et al., "A New Beam Search Based on Combination History of Selected Beams among Antennas for Distributed Antenna System", IEICE TECHNICAL REPORT, RCS, IEICE, JP, vol. 121, no. 210 (RCS2021-123), 14 October 2021, pages 31-36. This documents relates to a newly beam searching method to limit the directions of beams sweep based on the combinations of beams selected among the distributed antennas in the past.

### [Summary of Invention]

### [Technical Problem]

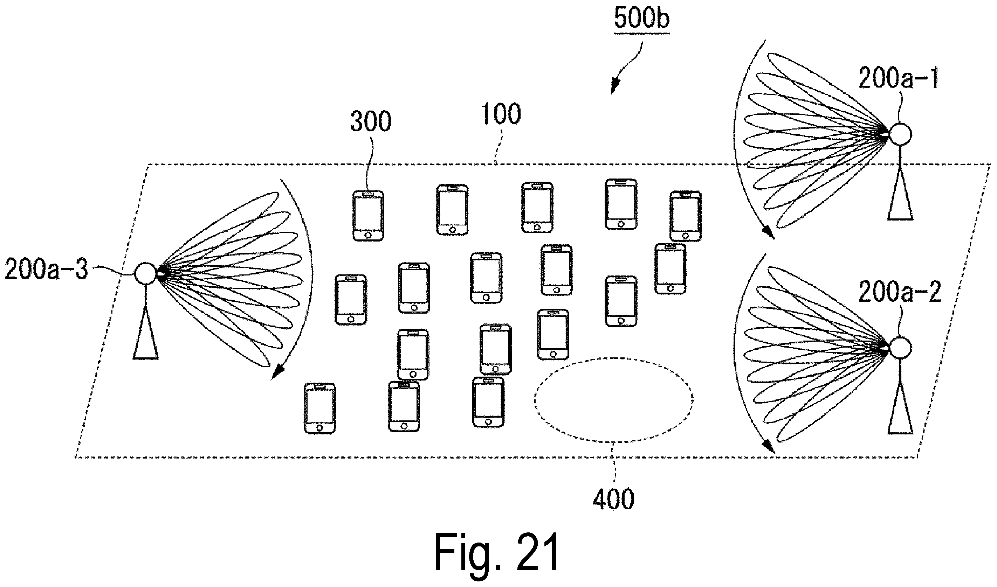

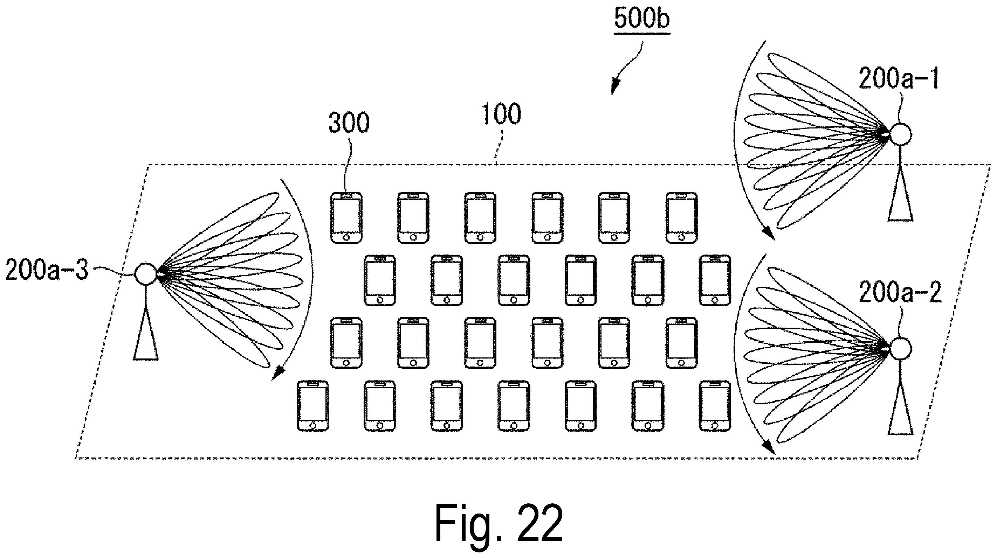

The total number of combinations of beams transmitted by the plurality of distributed antenna devices 200a-1 to 200a-3 is determined by the range where the terminal device 300 exists, the positions of the distributed antenna devices 200a-1 to 200a-3, the angular interval of discrete beams transmitted by the distributed antenna devices 200a-1 to 200a-3, and the like. Therefore, when the communication control device 220 performs processing in the storage mode, for example, in the vicinity of an area where the terminal device 300 did not exist in the past, such as the area indicated by reference numeral 400 in Fig. 21, it may not be possible to acquire candidate beams that have been previously selected in combination with a detection reference beam. In this case, since a sufficiently large number of records are not stored in the beam combination history table, appropriate beam search and beam selection may not be possible, and in such a case, the transmission capacity will be reduced. In order not to reduce the transmission capacity, for example, as shown in Fig. 22, it is conceivable to take a countermeasure such that the terminal device 300 is moved little by little at intervals that do not reduce the transmission capacity throughout the cell 100, which is a service providing area during processing performed in the storage mode so that a sufficiently large number of records are stored in the beam combination history table. Examples of methods for storing a sufficiently large number of records include a method performed by a business operator and a method performed using the user's terminal device 300.

If this is done by the business operator, there is a problem that it is very costly to move the terminal device 300 little by little throughout the cell 100, which is the service providing area, at intervals that do not reduce the transmission capacity. On the other hand, when the user's terminal device 300 is used, costs can be reduced, but there is a low possibility that the user will move in a manner ideal for the operator of the wireless communication system 500b. Therefore, when the user's terminal device 300 is used, there is a problem that it takes an enormous amount of time to obtain a sufficiently large number of records. In particular, since the beam width decreases as the carrier frequency increases, in order to avoid reduction in the transmission capacity, it is necessary to shorten the length of the intervals when moving the terminal device 300, and the time required to obtain a sufficiently large number of records will further increase.

In view of the above circumstances, an object of the present invention is to provide a technique enabling a number of records sufficient for reducing the number of beam searches to be stored without decreasing the transmission capacity when performing beam search processing without generating records indicating the history of beam combinations by moving a terminal device little by little at intervals that do not reduce the transmission capacity throughout a service providing area in advance.

### [Solution to Problem]

The invention is defined in the independent claims. Advantageous embodiments are described in the dependent claims. Other embodiments and/or examples not falling under the claims and not comprising these features are not part of the claimed invention but are useful for understanding the invention.

### [Advantageous Effects of Invention]

According to the present invention, a number of records sufficient for reducing the number of beam searches can be stored without decreasing the transmission capacity when performing beam search processing without generating records indicating the history of beam combinations by moving a terminal device little by little at intervals that do not reduce the transmission capacity throughout a service providing area in advance.

### [Brief Description of Drawings]

[Fig. 1] Fig. 1 is a block diagram showing the configuration of a wireless communication system according to a first embodiment.
[Fig. 2] Fig. 2 is a block diagram showing an internal configuration of a communication control device and the connection relationship between the communication control device and a digital signal processing device according to the first embodiment.
[Fig. 3] Fig. 3 is a diagram showing a data format of a beam count table stored in a beam search execution instruction unit of the first embodiment.
[Fig. 4] Fig. 4 is a diagram showing a data format of a beam combination history table stored in a beam combination history storage unit of the first embodiment.
[Fig. 5] Fig. 5 is a block diagram showing an internal configuration of a terminal device according to the first embodiment.
[Fig. 6] Fig. 6 is a flowchart (part 1) showing the flow of processing by the terminal device of the first embodiment.
[Fig. 7] Fig. 7 is a flowchart (part 2) showing the flow of processing by the terminal device of the first embodiment.
[Fig. 8] Fig. 8 is a flowchart showing the overall flow of processing by the wireless communication system of the first embodiment.
[Fig. 9] Fig. 9 is a flowchart showing the flow of beam combination generation processing according to the first embodiment.
[Fig. 10] Fig. 10 is a flowchart showing the flow of beam search processing in the first embodiment.
[Fig. 11] Fig. 11 is a flowchart showing the flow of subroutine processing of all-beam search execution determination executed in the beam search processing of the first embodiment.
[Fig. 12] Fig. 12 is a diagram showing an outline of processing performed in the wireless communication system of the first embodiment.
[Fig. 13] Fig. 13 is a block diagram showing an internal configuration of a communication control device and the connection relationship between the communication control device and a digital signal processing device according to a second embodiment.
[Fig. 14] Fig. 14 is a diagram showing a data format of a beam combination history table stored in a beam combination history storage unit of the second embodiment.
[Fig. 15] Fig. 15 is a flowchart showing the flow of beam search processing in the second embodiment.
[Fig. 16] Fig. 16 is a flowchart showing the flow of subroutine processing of all-beam search execution determination executed in the beam search processing of the second embodiment.
[Fig. 17] Fig. 17 is a block diagram showing the configuration of a conventional general wireless communication system.
[Fig. 18] Fig. 18 is a block diagram showing the configuration of an example of a high-frequency band distributed antenna system.
[Fig. 19] Fig. 19 is a diagram (part 1) for explaining an outline of the technique disclosed in NPL 6.
[Fig. 20] Fig. 20 is a diagram (part 2) for explaining an outline of the technique disclosed in NPL 6.
[Fig. 21] Fig. 21 is a diagram (part 1) for explaining the problem in the technique disclosed in NPL 6.
[Fig. 22] Fig. 22 is a diagram (part 2) for explaining the problem in the technique disclosed in NPL 6.

### [Description of Embodiments]

### (First Embodiment)

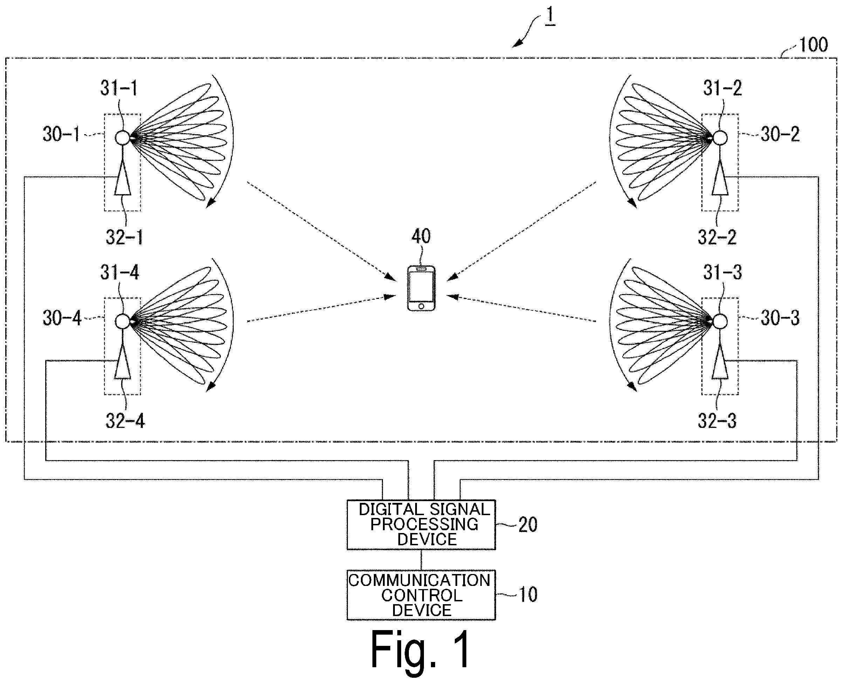

Hereinafter, an embodiment of the present invention will be described with reference to the drawings. Fig. 1 is a block diagram showing an example of the configuration of a wireless communication system 1 according to the first embodiment. The wireless communication system 1 includes at least one cell 100. Distributed antenna devices 30-1, 30-2, 30-3, and 30-4 and a terminal device 40 are provided within the area of the cell 100. The wireless communication system 1 includes a communication control device 10 and a digital signal processing device 20. The communication control device 10 is connected to the digital signal processing device 20. The digital signal processing device 20 is connected to each of the distributed antenna devices 30-1 to 30-4. The communication control device 10, the digital signal processing device 20, and the distributed antenna devices 30-1 to 30-4 constitute a so-called base station device.

Note that the wireless communication system 1 shown in Fig. 1 is an exemplary configuration, and the wireless communication system 1 may be configured such that a plurality of distributed antenna devices 30-1 to 30-N are provided in the cell 100, and the digital signal processing device 20 is connected to each of the distributed antenna devices 30-1 to 30-N. Here, N is an integer of 2 or more. The wireless communication system 1 may have a configuration as shown in Fig. 18, that is, a configuration including a plurality of cells 100. In this case, the wireless communication system 1 includes a number of digital signal processing devices 20 and a number of communication control devices 10, the number corresponding to the number of cells 100, each of the communication control devices 10 is connected to a corresponding digital signal processing device 20, and each of the digital signal processing devices 20 is connected to the distributed antenna devices 30-1 to 30-N in the corresponding cell 100.

Each of the distributed antenna devices 30-1 to 30-4 is capable of beamforming in which beams of radio waves are formed while switching directions, and is connected to the terminal device 40 by radio waves. Note that although Fig. 1 shows an example in which the distributed antenna devices 30-1 to 30-4 form beams in nine directions, the number of directions in which the distributed antenna devices 30-1 to 30-4 can form beams may be two or more. The maximum number of directions in which the distributed antenna devices 30-1 to 30-4 can form beams is determined in advance by the specifications of the distributed antenna devices 30-1 to 30-4, and the operator may be able to arbitrarily determine the number of beams. The distributed antenna devices 30-1 to 30-4 include distributed antennas 31-1 to 31-4 and main devices 32-1 to 32-4, respectively. Each of the distributed antennas 31-1 to 31-4 is given a distributed antenna ID in advance that allows each distributed antenna to be uniquely identified.

The main devices 32-1 to 32-4 transmit and receive radio-frequency analog signals through the distributed antennas 31-1 to 31-4 connected to the main devices 32-1 to 32-4, respectively. That is, each of the main devices 32-1 to 32-4 modulates a carrier wave based on the digital signal of the transmission data output by the digital signal processing device 20 to generate a radio-frequency analog signal. The main devices 32-1 to 32-4 transmit the generated analog signals using radio waves from the distributed antennas 31-1 to 31-4 connected to the main devices 32-1 to 32-4, respectively. The main devices 32-1 to 32-4 demodulate the analog signals that the distributed antennas 31-1 to 31-4 connected thereto output by receiving radio waves into digital signals. The main devices 32-1 to 32-4 output the converted digital signals to the digital signal processing device 20.

From the perspective of beamforming, each of the main devices 32-1 to 32-4 receives a digital signal of a beam search signal as transmission data output by the digital signal processing device 20. Each of the main devices 32-1 to 32-4 modulates a carrier wave based on the beam search signal so as to form a beam in the direction corresponding to the beam ID included in the received beam search signal. The main devices 32-1 to 32-4 transmit radio-frequency analog signals carrying beam search signals generated by modulation through the distributed antennas 31-1 to 31-4 connected to the main devices 32-1 to 32-4, respectively.

Here, the beam ID is, for example, an identifier in which a character string "beam ID#" is added to a continuous integer value starting from 1, and is an identifier determined in advance for each of the distributed antenna devices 30-1 to 30-4. For example, if the distributed antenna device 30-1 can form beams in 40 different directions, the beam IDs "beam ID#1" to "beam ID#40" are fixedly assigned in advance to the beams in 40 directions, and data indicating the correspondence between the beam ID and the direction is stored in advance in a storage area inside the main device 32-1. In other words, when "beam ID#1" is specified by the beam search signal for the main device 32-1 of the distributed antenna device 30-1, the direction of the beam formed by the distributed antenna 31-1 of the distributed antenna device 30-1 will be uniquely determined. This also applies to the other distributed antenna devices 30-2 to 30-4, and in this case, the same beam ID may exist in the distributed antenna devices 30-1 to 30-4.

The digital signal processing device 20 outputs a digital signal of transmission data to the main devices 32-1 to 32-4. Upon receiving a beam search instruction signal from the communication control device 10, the digital signal processing device 20 sets the distributed antenna ID included in the beam search instruction signal as a source antenna ID, and generates a beam search signal including the source antenna ID and the beam ID included in the beam search instruction signal. The digital signal processing device 20 outputs the generated beam search signal to the main devices 32-1 to 32-4 corresponding to the distributed antenna ID included in the beam search instruction signal. As a result, the terminal device 40 receiving the beam carrying the beam search signal can identify the source distributed antennas 31-1 to 31-4 of the beam search signal by referring to the source antenna ID included in the beam search signal and can identify the beam carrying the beam search signal by referring to the beam ID included in the beam search signal.

The digital signal processing device 20 detects reception data included in the digital signals output by the main devices 32-1 to 32-4. If the detected reception data is a feedback signal transmitted by the terminal device 40 on radio waves, the digital signal processing device 20 outputs the feedback signal to the communication control device 10.

### (Configuration of communication control device of first embodiment)

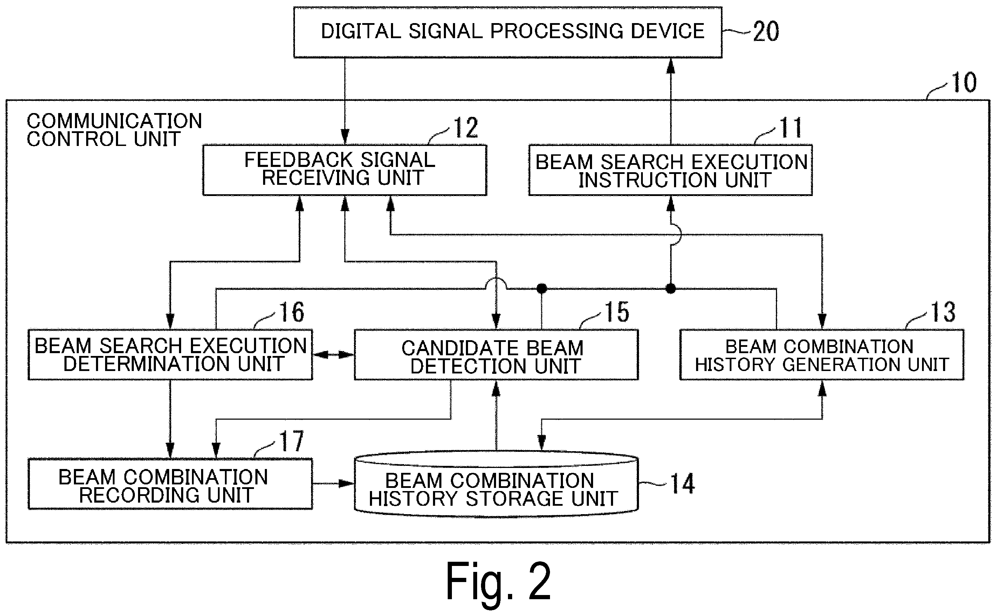

As shown in Fig. 2, the communication control device 10 includes a beam search execution instruction unit 11, a feedback signal receiving unit 12, a beam combination history generation unit 13, a beam combination history storage unit 14, a candidate beam detection unit 15, and a beam search execution determination unit 16 and a beam combination recording unit 17.

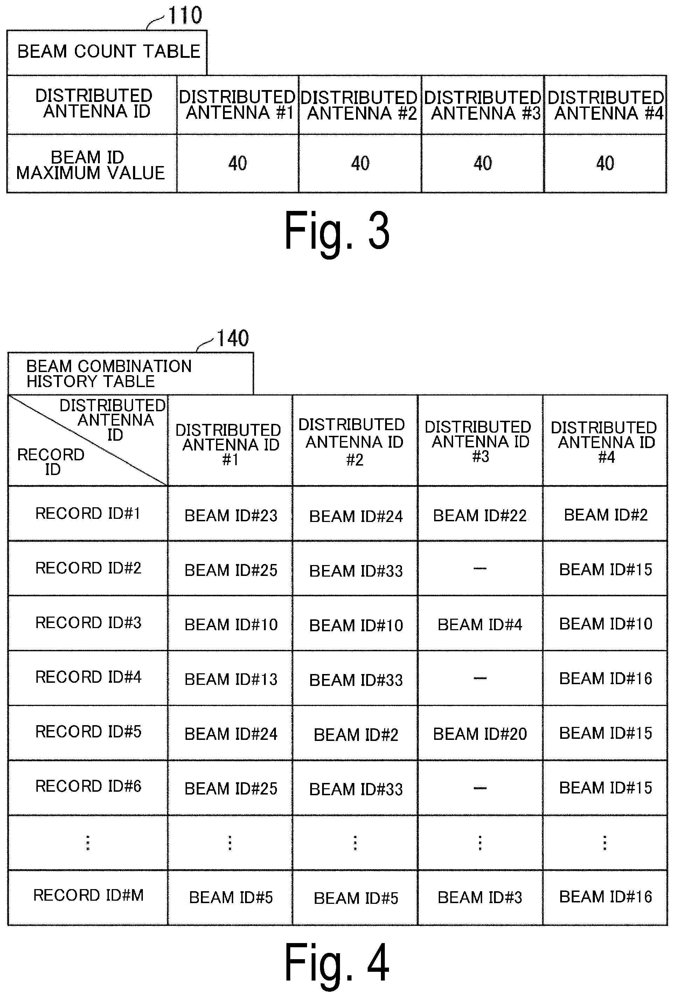

The beam search execution instruction unit 11 instructs each of the distributed antenna devices 30-1 to 30-4, via the digital signal processing device 20, to perform an all-beam search for transmitting beams while switching time in each of all directions in which each distributed antenna device can transmit beams or perform a partial beam search for transmitting beams while switching time in one or more specific directions. The beam search execution instruction unit 11 has a beam count table 110 shown in Fig. 3 stored in an internal storage area in advance. The beam count table 110 has items of "distributed antenna ID" and "beam ID maximum value". In the "distributed antenna ID" item, "distributed antenna ID#1", "distributed antenna ID#2", "distributed antenna ID ID#3", and "distributed antenna ID#4" which are assigned to the distributed antennas 31-1 to 31-4 are written in advance. Here, "distributed antenna ID#1" corresponds to the distributed antenna ID assigned to the distributed antenna 31-1, "distributed antenna ID#2" corresponds to the distributed antenna ID assigned to the distributed antenna 31-2, "distributed antenna ID#3" corresponds to the distributed antenna ID assigned to the distributed antenna 31-3, and "distributed antenna ID#4" corresponds to the distributed antenna ID assigned to the distributed antenna 31-4.

In the "beam ID maximum value" item, the maximum value of the beam ID for each of the distributed antennas 31-1 to 31-4, that is, the number of beam transmission directions that each of the distributed antennas 31-1 to 31-4 can transmit beams, is written in advance. Note that in Fig. 3, the values of the "beam ID maximum values" of the distributed antennas 31-1 to 31-4 are all "40", but they may be different values.

Upon receiving an all-beam search request signal including the distributed antenna ID, the beam search execution instruction unit 11 refers to the beam count table 110 to read the beam ID maximum value corresponding to the distributed antenna ID included in the all-beam search request signal. The beam search execution instruction unit 11 generates a number of beam search instruction signals corresponding to the read beam ID maximum value, the beam search instruction signals each containing one beam ID between 1 and the beam ID maximum value so that the beam IDs contained therein are all different beam IDs. The beam search execution instruction unit 11 writes the distributed antenna ID included in the all-beam search request signal into each of the generated beam search instruction signals.

For example, when an all-beam search request signal in which the distributed antenna ID is "distributed antenna ID#1" is received, the beam search execution instruction unit 11 will generate forty beam search instruction signals. More specifically, since the beam search execution instruction unit 11 generates "beam ID#1" to "beam ID#40", each of the generated forty beam search instruction signals includes ("distributed antenna ID#1", "beam ID#1"), ("distributed antenna ID#1", "beam ID#2"),..., and ("distributed antenna ID#1", "beam ID#40"). Note that, as described above, "beam ID#1" to "beam ID#40" generated by the beam search execution instruction unit 11 are fixedly associated with the beams in the forty directions formed by the distributed antenna 31-1 in the main device 32-1 of the distributed antenna device 30-1. Therefore, the beam ID generation processing performed by the beam search execution instruction unit 11 involves just generating a number of beam IDs for all directions rather than generating a new beam ID and associating the beam ID with the direction of the beam transmitted by the distributed antenna device 30-1.

Upon receiving a partial beam search request signal including a distributed antenna ID and one or more beam IDs, the beam search execution instruction unit 11 generates a number of beam search instruction signals corresponding to the number of beam IDs included in the partial beam search request signal. The beam search execution instruction unit 11 writes the beam IDs included in the partial beam search request signals one by one into the beam search instruction signals so that the beam IDs included in each of the generated beam search instruction signals are all different beam IDs. The beam search execution instruction unit 11 writes the distributed antenna ID included in the partial beam search request signal into each of the generated beam search instruction signals. The beam search execution instruction unit 11 outputs the all-beam search request signals or the beam search instruction signals generated by receiving the partial beam search request signals one by one to the digital signal processing device 20 in the order of generation at predetermined fixed time intervals.

When the beam combination generation processing for generating beam combinations is started, the beam combination history generation unit 13 causes all of the distributed antenna devices 30-1 to 30-4 to perform an all-beam search in each trial cycle thereby generating a record indicating the combination of beam IDs indicating the beam determined to be the best beam for each of the distributed antenna devices 30-1 to 30-4.

The beam combination history storage unit 14 stores, for example, a beam combination history table 140 shown in Fig. 4. As shown in Fig. 4, the beam combination history table 140 has an item "distributed antenna ID" on the horizontal axis and an item "record ID" on the vertical axis. In the "distributed antenna ID" item, "distributed antenna ID#1", "distributed antenna ID#2", "distributed antenna ID ID#3", and "distributed antenna ID#4" which are distributed antenna IDs assigned to the distributed antennas 31-1 to 31-4 are written in advance.

In the "record" item, record IDs that are assigned to records generated in each trial cycle and are different identifiers are written. For example, "record ID#1" is the record ID assigned to the record generated in the first trial cycle, and "record ID#2" is the record ID assigned to the record generated in the second trial cycle. Information indicating the beam ID is written in each element specified by the distributed antenna ID on the horizontal axis and the record ID on the vertical axis. In other words, "beam ID#23" of the "record 1" element of "distributed antenna ID#1" indicates that the beam ID indicating the beam that was determined to be the best beam for the distributed antenna device 30-1 in the first trial cycle is "beam ID#23".

Upon receiving an output destination switching instruction signal, the feedback signal receiving unit 12 sets any one of the beam combination history generation unit 13, candidate beam detection unit 15, and beam search execution determination unit 16 specified by the output destination switching instruction signal as the output destination of the feedback signal. When the feedback signal receiving unit 12 receives the feedback signal output from the digital signal processing device 20, the feedback signal receiving unit 12 outputs the received feedback signal to the set output destination.

When the beam search processing for searching for a beam is started, the candidate beam detection unit 15 causes the distributed antenna devices 30-1 to 30-4 to sequentially perform an all-beam search one by one. That is, the candidate beam detection unit 15 sequentially specifies the distributed antenna IDs of the distributed antennas 31-1 to 31-4 one by one, and outputs an all-beam search request signal containing the specified one distributed antenna ID to the beam search execution instruction unit 11. When the candidate beam detection unit 15 receives the first feedback signal after the beam search processing is started, the candidate beam detection unit 15 stops the all-beam search and sets the beam identified by the beam ID and the source antenna ID included in the feedback signal as a detection reference beam. The candidate beam detection unit 15 detects, from the beam combination history table 140, the beam IDs of the distributed antenna devices 30-1 to 30-4 that have not performed the all-beam search during a beam search period, the beam IDs corresponding to the beams that have been selected together with the detection reference beam, and the distributed antenna IDs corresponding to the beam IDs. Here, the beam search period is, for example, the time allocated to one beam search processing. The beam search processing is a process that is performed periodically, and this period is referred to as a beam search cycle. Each beam search cycle includes a beam search period in which one beam search processing is performed, and a data transmission period performed after the beam search period between the distributed antennas 31-1 to 31-4 of the distributed antenna devices 30-1 to 30-4 and terminal antennas 41-1 to 41-M of the terminal device 40. In addition, the above-mentioned "beam search period" and the "beam search period" described below refer to one beam search period included in one beam search cycle, unless otherwise stated. The candidate beam detection unit 15 uses the detected beam IDs as beam IDs (hereinafter also referred to as candidate beam IDs) indicating candidate beams in the distributed antenna devices 30-1 to 30-4 corresponding to the detected distributed antenna IDs and outputs the combinations of the detected distributed antenna IDs and candidate beam IDs as detection results.

The beam search execution determination unit 16 determines whether to cause the distributed antenna devices 30-1 to 30-4, which have not performed the all-beam search in the beam search period, to perform the all-beam search based on the detection results from the candidate beam detection unit 15. More specifically, the beam search execution determination unit 16 determines the distributed antenna devices 30-1 to 30-4 which have not performed the all-beam search in the beam search period, and of which the candidate beam IDs are not included in the detection results from the candidate beam detection unit 15 as the distributed antenna devices 30-1 to 30-4 that should perform the all-beam search.

The beam search execution determination unit 16 causes the distributed antenna devices 30-1 to 30-4 whose candidate beam IDs are included in the detection results from the candidate beam detection unit 15 to perform a partial beam search based on the candidate beam IDs included in the detection results. That is, the beam search execution determination unit 16 outputs a partial beam search request signal including the distributed antenna IDs included in the detection results and the candidate beam IDs to the beam search execution instruction unit 11. The beam search execution determination unit 16 determines, based on the reception power value included in the feedback signal transmitted by the terminal device 40 that has received the beam used for the partial beam search and a predetermined threshold, whether to cause the distributed antenna devices 30-1 to 30-4 corresponding to the source antenna IDs included in the feedback signal to perform an all-beam search. When it is determined that the all-beam search is to be performed, the beam search execution determination unit 16 specifies the source antenna ID included in the feedback signal that is the determination target. The beam search execution determination unit 16 outputs an all-beam search request signal including the specified source antenna ID to the beam search execution instruction unit 11.

The beam combination recording unit 17 generates one record based on the combination of the beam ID of the beam that was finally determined to be the best beam for each of the distributed antenna devices 30-1 to 30-4 in the beam search period and the source antenna ID corresponding to the beam ID. The beam combination recording unit 17 assigns a new record ID to the generated record and writes it into the beam combination history table 140.

### (Configuration of terminal device of first embodiment)

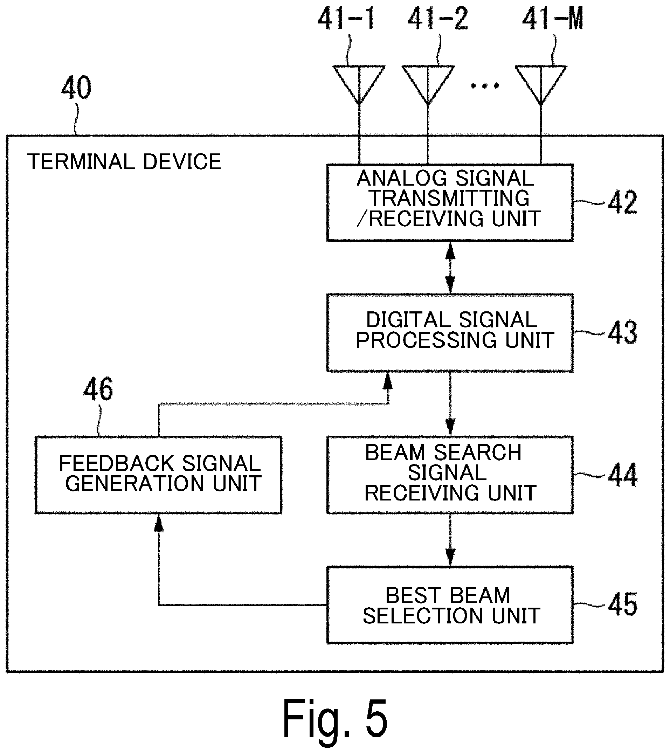

Fig. 5 is a block diagram showing the configuration of the terminal device 40. The terminal device 40 includes M terminal antennas 41-1 to 41-M, an analog signal transmitting/receiving unit 42, a digital signal processing unit 43, a beam search signal receiving unit 44, a best beam selection unit 45, and a feedback signal generation unit 46. Here, M is an integer of 2 or more. Wireless communication using distributed MIMO is performed between the terminal antennas 41-1 to 41-M and the distributed antennas 31-1 to 31-4 included in each of the distributed antenna devices 30-1 to 30-4.

The analog signal transmitting/receiving unit 42 generates a radio-frequency analog signal by modulating the carrier wave based on the digital signal of the transmission data output by the digital signal processing unit 43. The analog signal transmitting/receiving unit 42 transmits the generated analog signal using radio waves through the terminal antennas 41-1 to 41-M. The analog signal transmitting/receiving unit 42 demodulates the analog signals output by the terminal antennas 41-1 to 41-M receiving radio waves and converts them into digital signals. The analog signal transmitting/receiving unit 42 outputs the converted digital signals to the digital signal processing unit 43. The analog signal transmitting/receiving unit 42 measures the reception power of the beams received by the terminal antennas 41-1 to 41-M. The analog signal transmitting/receiving unit 42 associates the reception power value obtained through the measurement with a digital signal corresponding to the beam to be measured, and outputs it to the digital signal processing unit 43.

The digital signal processing unit 43 outputs the digital signal of the feedback signal output by the feedback signal generation unit 46 to the analog signal transmitting/receiving unit 42. The digital signal processing unit 43 receives the digital signal output from the analog signal transmitting/receiving unit 42 and the reception power value associated with the digital signal. The digital signal processing unit 43 associates the received reception power value with the beam search signal included as reception data in the received digital signal, and outputs it to the beam search signal receiving unit 44.

The beam search signal receiving unit 44 receives the beam search signal output by the digital signal processing unit 43 and the reception power value associated with the beam search signal. The beam search signal receiving unit 44 combines the source antenna ID and beam ID included in the received beam search signal and the received reception power value, and writes and stores the combination in an internal storage area as a set of data. When the beam search signal receiving unit 44 receives all the beam search signals for any one of the distributed antenna devices 30-1 to 30-4, the beam search signal receiving unit 44 detects and reads all pieces of data including the source antenna IDs corresponding to the distributed antenna devices 30-1 to 30-4 that have received all the beam search signals among the pieces of data stored in the internal storage area. The beam search signal receiving unit 44 outputs all the read data to the best beam selection unit 45 as one set of data.

The best beam selection unit 45 receives one set of data output by the beam search signal receiving unit 44. The best beam selection unit 45 selects data corresponding to the maximum reception power value from among the set of received data. In other words, the best beam selection unit 45 selects the beam indicated by the beam ID corresponding to the selected maximum reception power value as the best beam for the distributed antenna devices 30-1 to 30-4 corresponding to the source antenna ID. The best beam selection unit 45 outputs the source antenna ID, beam ID, and reception power value included in the selected data to the feedback signal generation unit 46. The feedback signal generation unit 46 generates a feedback signal including the source antenna ID, beam ID, and reception power value output by the best beam selection unit 45. The feedback signal generation unit 46 outputs the generated feedback signal to the digital signal processing unit 43.

### (Processing by terminal device of first embodiment)

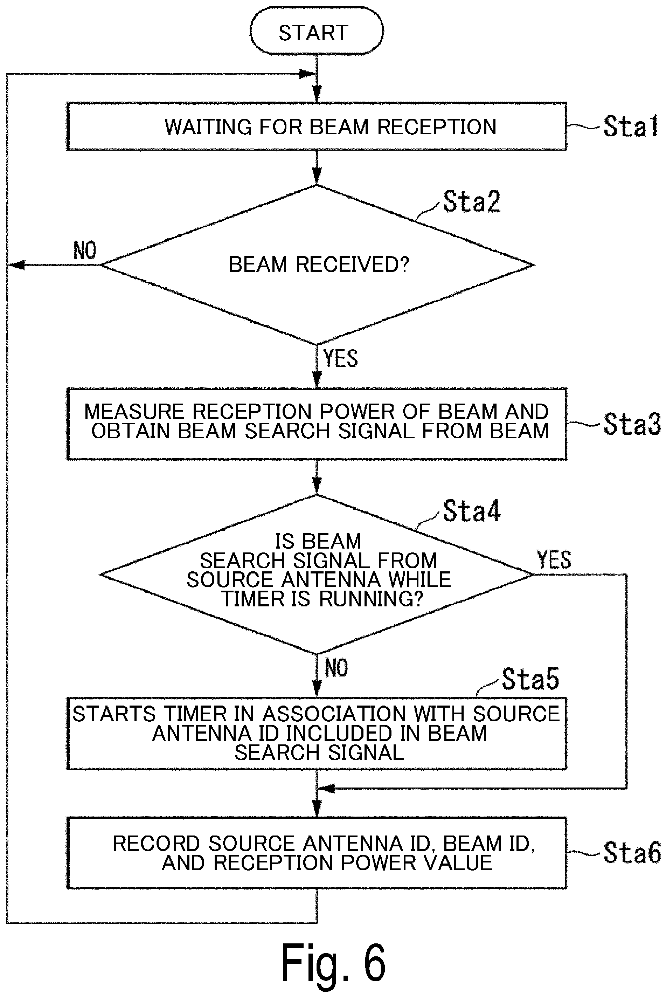

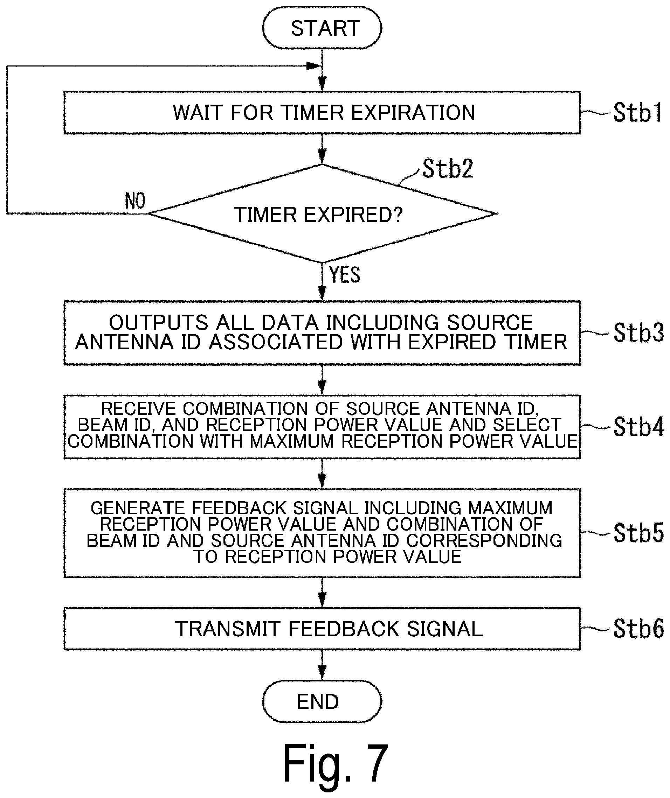

Processing by the terminal device 40 will be explained with reference to Figs. 6 and 7. Fig. 6 is a flowchart showing the flow of processing performed when the terminal device 40 receives beams transmitted by the distributed antenna devices 30-1 to 30-4.

The analog signal transmitting/receiving unit 42 waits for reception of beams transmitted by the distributed antennas 31-1 to 31-4 of the distributed antenna devices 30-1 to 30-4 (step Sta1), and repeatedly determines whether a beam has been received through the terminal antennas 41-1 to 41-M (step Sta2). When the analog signal transmitting/receiving unit 42 determines that the beam is not being received (step Sta2, No), the analog signal transmitting/receiving unit 42 continues to perform the processing of step Sta1, that is, waits for beam reception.

On the other hand, when the analog signal transmitting/receiving unit 42 determines that the beam has been received (step Sta2, Yes), the analog signal transmitting/receiving unit 42 measures the reception power of the beam received through the terminal antennas 41-1 to 41-M. The analog signal transmitting/receiving unit 42 converts the received beam into a digital signal. The analog signal transmitting/receiving unit 42 associates the reception power value obtained through measurement with the digital signal obtained through the conversion, and outputs the digital signal to the digital signal processing unit 43. The digital signal processing unit 43 receives the digital signal output from the analog signal transmitting/receiving unit 42 and the reception power value associated with the digital signal. The digital signal processing unit 43 acquires a beam search signal included in the digital signal as reception data by detecting reception data from the received digital signal. The digital signal processing unit 43 associates the received reception power value with the acquired beam search signal and outputs the beam search signal to the beam search signal receiving unit 44.

The beam search signal receiving unit 44 receives the beam search signal output from digital signal processing unit 43 and the reception power value associated with the beam search signal. The beam search signal receiving unit 44 reads the beam ID and the source antenna ID included in the received beam search signal (step Sta3).

The beam search signal receiving unit 44 is capable of generating a plurality of timers internally, and determines whether the read source antenna ID is associated with any of the timers (step Sta4). If the beam search signal receiving unit 44 determines that the read source antenna ID is not associated with any timer (step Sta4, No), the beam search signal receiving unit 44 generates one timer in association with the read source antenna ID and starts the timer. When starting the timer, the beam search signal receiving unit 44 sets, in the timer, the time required for the distributed antenna devices 30-1 to 30-4 that transmit the largest number of beams to transmit all beams. Note that the time is assumed to be a predetermined time (step Sta5).

On the other hand, if the beam search signal receiving unit 44 determines that the read source antenna ID is associated with any timer (step Sta4, Yes), or after the processing in step Sta5, the beam search signal receiving unit 44 combines the read source antenna ID and beam ID with the received reception power value into one set of data, and writes and stores the one set of data in an internal storage area (step Sta6). Thereafter, the processing after step Sta1 is repeated.

To put it another way about the determination processing in step Sta4 above, the beam search signal receiving unit 44 determines in the determination processing whether the received beam search signal is the first beam search signal in the all-beam search or the partial beam search performed by each of the distributed antenna devices 30-1 to 30-4 based on whether the timer is started. If a timer is not generated in association with the source antenna ID included in the beam search signal received by the beam search signal receiving unit 44, the beam search signal is the first beam search signal. If the timer is generated, the beam search signal is the second or subsequent beam search signal.

Fig. 7 is a flowchart showing the flow of processing performed when the timer started by the beam search signal receiving unit 44 expires. The beam search signal receiving unit 44 waits for the timer started in the processing of step Sta5 in Fig. 6 to expire. It is assumed that the timer outputs a timer expiration notification signal when the time being measured reaches a set time and the timer expires (step Stb1).

The beam search signal receiving unit 44 repeatedly determines whether a timer expiration notification has been received from any of the timers (step Stb2), and if it is determined that a timer expiration notification is not received (step Stb2, No), the beam search signal receiving unit 44 continues the processing of step Stb1, that is, waits for the timer to expire. On the other hand, if the beam search signal receiving unit 44 determines that a timer expiration notification has been received from any timer (step Stb2, Yes), the beam search signal receiving unit 44 acquires the source antenna ID associated with the expired timer and erases the timer. The beam search signal receiving unit 44 detects and reads all pieces of data including the acquired source antenna ID, that is, data which is a combination of the source antenna ID, the beam ID, and the reception power value, from among the data stored in the internal storage area. After reading, the beam search signal receiving unit 44 deletes the read data from the internal storage area. The beam search signal receiving unit 44 outputs all the read data to the best beam selection unit 45 as one set of data (step Stb3).

The best beam selection unit 45 receives one set of data output by the beam search signal receiving unit 44. The best beam selection unit 45 selects data including the maximum reception power value from among the received set of data (step Stb4). The best beam selection unit 45 outputs the source antenna ID, beam ID, and reception power value included in the selected data to the feedback signal generation unit 46. The feedback signal generation unit 46 receives the source antenna ID, beam ID, and reception power value output by the best beam selection unit 45, and generates a feedback signal including the received source antenna ID, beam ID, and reception power value. The feedback signal generation unit 46 outputs the generated feedback signal to the digital signal processing unit 43 (step Stb5).

The digital signal processing unit 43 receives the feedback signal output from the feedback signal generation unit 46. The digital signal processing unit 43 outputs the received feedback signal to the analog signal transmitting/receiving unit 42. The analog signal transmitting/receiving unit 42 generates a radio-frequency analog signal from the feedback signal output by the digital signal processing unit 43. The analog signal transmitting/receiving unit 42 transmits the generated analog signal using radio waves through the terminal antennas 41-1 to 41-M (step Stb6).

### (Processing by wireless communication system of first embodiment)

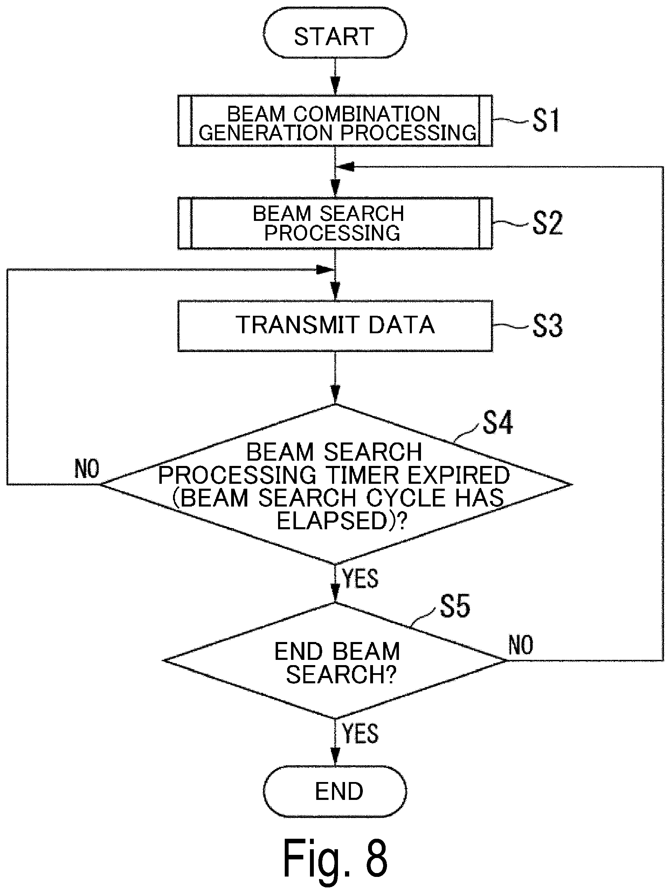

Fig. 8 is a flowchart showing the entire processing performed by the wireless communication system 1. In the communication control device 10, for example, in response to an operation by an operator who operates the wireless communication system 1, first, the beam combination history generation unit 13 performs beam combination generation processing in order to generate the beam combination history table 140 (step S1). When the beam combination generation processing by the beam combination history generation unit 13 is completed, the candidate beam detection unit 15 starts beam search processing in response to an operator's operation (step S2). When the beam search processing is completed, for example, data transmission processing using the beams of the distributed antenna devices 30-1 to 30-4, selected by the beam search processing, is started between the communication device connected to the digital signal processing device 20 and the terminal device 40 (step S3). During the data transmission processing, the candidate beam detection unit 15 repeatedly determines whether a beam search cycle timer described later has expired at regular intervals in order to determine whether a beam search cycle has elapsed (step S4). If the candidate beam detection unit 15 determines that the beam search cycle timer has not expired (step S4, No), data transmission processing is performed continuously. On the other hand, if the candidate beam detection unit 15 determines that the beam search cycle timer has expired (step S4, Yes), the candidate beam detection unit 15 outputs a data transmission termination instruction signal to the digital signal processing device 20 to terminate the data transmission processing. Upon receiving the data transmission termination instruction signal, the digital signal processing device 20 stops outputting data to be transmitted to the distributed antenna devices 30-1 to 30-4. As a result, the data transmission processing performed between the communication device connected to the digital signal processing device 20 and the terminal device 40 via the distributed antenna devices 30-1 to 30-4 ends.

The operator determines whether to stop beam search processing by the communication control device 10 (step S5). If the operator determines not to stop the beam search processing by the communication control device 10 (step S5, No), the processing proceeds to step S2, and the candidate beam detection unit 15 starts the processing for the next beam search cycle. On the other hand, if the operator determines that the beam search processing by the communication control device 10 should be stopped (step S5, Yes), the operator operates the communication control device 10 to stop the beam search processing. Details of the beam combination generation processing in step S1 and the beam search processing in step S2 will be described below.

### (Beam combination generation processing of first embodiment)

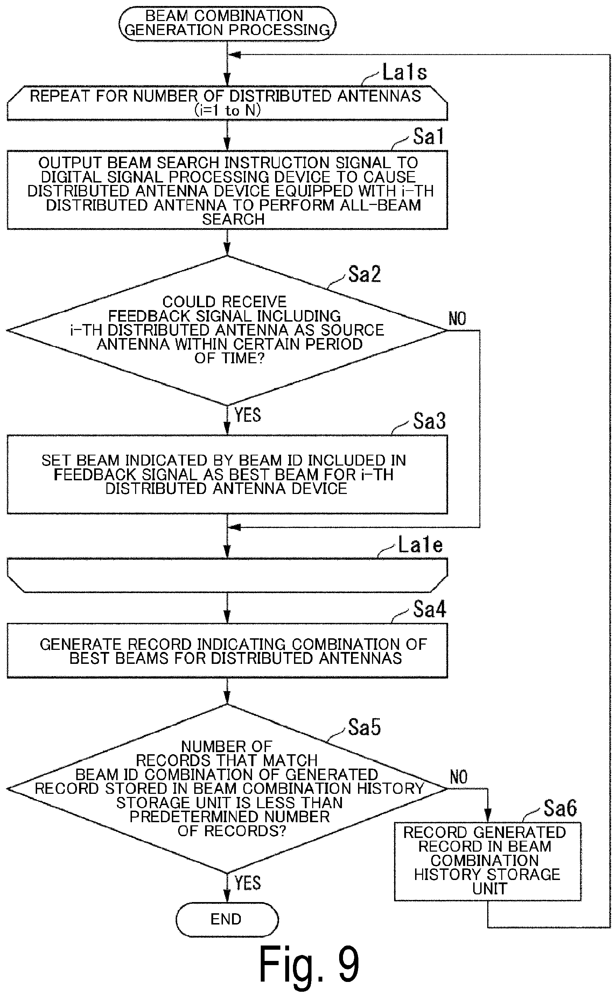

Fig. 9 is a flowchart showing the flow of the beam combination generation processing performed in the processing of step S1 in Fig. 8. In response to an operation by the operator of the wireless communication system 1, the beam combination history generation unit 13 of the communication control device 10 starts processing for the first trial cycle of beam combination generation processing. The beam combination history generation unit 13 reads all distributed antenna IDs written in the distributed antenna ID item of the beam combination history table 140 stored in the beam combination history storage unit 14. The beam combination history generation unit 13 provides a counter i in its internal storage area and initializes it to i=1. Here, i is an integer value from 1 to N. The wireless communication system in Fig. 1 includes four distributed antenna devices 30-1 to 30-4, and the beam combination history generation unit 13 reads four distributed antenna IDs, "distributed antenna ID#1", "distributed antenna ID#2", "distributed antenna ID#3", and "distributed antenna ID#4" from the beam combination history table 140. In the following description, it is assumed that N=4. The following description will be made assuming that the i-th distributed antenna device is a distributed antenna device 30-i, the i-th distributed antenna is a distributed antenna 31-i, and the i-th main device is a main device 32-i.

The beam combination history generation unit 13 outputs an output destination switching instruction signal to the feedback signal receiving unit 12 to set the output destination to the beam combination history generation unit 13. When the feedback signal receiving unit 12 receives an output destination switching instruction signal from the beam combination history generation unit 13 to set the output destination to the beam combination history generation unit 13, the feedback signal receiving unit 12 sets the output destination of the feedback signal to the beam combination history generation unit 13.

The beam combination history generation unit 13 generates an all-beam search request signal including the distributed antenna ID assigned to the i-th distributed antenna 31-i to the beam search execution instruction unit 11 in order to cause the distributed antenna device 30-i including the i-th distributed antenna 31-i to perform an all-beam search. After outputting the all-beam search request signal to the beam search execution instruction unit 11, the beam combination history generation unit 13 starts an internal feedback signal timer. When starting the feedback signal timer, the beam combination history generation unit 13 sets the time required to acquire a feedback signal through the all-beam search performed by the distributed antenna devices 30-1 to 30-4 that transmit the largest number of beams after the beam combination history generation unit 13 outputs the all-beam search request signal to the beam search execution instruction unit 11 in the feedback signal timer. Note that this time is a predetermined time and is set in the beam combination history generation unit 13 in advance.

The beam search execution instruction unit 11 receives the all-beam search request signal output by the beam combination history generation unit 13, and reads the distributed antenna ID of the i-th distributed antenna 31-i included in the received all-beam search request signal. The beam search execution instruction unit 11 reads the beam ID maximum value corresponding to the distributed antenna ID of the i-th distributed antenna 31-i read from the beam count table 110 in the internal storage area. Here, as an example, it is assumed that the beam search execution instruction unit 11 reads "40" as the beam ID maximum value.

The beam search execution instruction unit 11 generates a number of beam search instruction signals corresponding to the read beam ID maximum value (that is, "40"), the beam search instruction signals each containing one beam ID between 1 and the beam ID maximum value so that the beam IDs contained therein are all different beam IDs. The beam search execution instruction unit 11 writes the read distributed antenna ID of the i-th distributed antenna 31-i into each of the generated beam search instruction signals. The beam search execution instruction unit 11 outputs the generated forty beam search instruction signals one by one to the digital signal processing device 20 in the order of generation at predetermined fixed time intervals.

The digital signal processing device 20 sequentially receives the forty beam search instruction signals output from the beam search execution instruction unit 11. The digital signal processing device 20 generates a beam search signal from the received beam search instruction signal. The digital signal processing device 20 outputs the generated beam search signals to the i-th main device 32-i corresponding to the distributed antenna ID included in the beam search instruction signal in the order of generation. The i-th main device 32-i receives the beam search signal output from the digital signal processing device 20. The i-th main device 32-i modulates a carrier wave based on the beam search signal so as to form a beam in the direction corresponding to the beam ID included in the received beam search signal. The i-th main device 32-i generates a radio-frequency analog signal carrying the beam search signal generated by modulation. The i-th main device 32-i outputs the generated radio-frequency analog signal to the i-th distributed antenna 31-i, whereby the i-th distributed antenna 31-i transmits a beam carrying the beam search signal in the direction of the beam ID included in the beam search signal (step Sa1).

The terminal device 40 receives all the beams transmitted by the distributed antenna 31-i. The terminal device 40 performs the processing described with reference to Figs. 6 and 7 on each of the received beams. The distributed antenna 31-i receives radio waves carrying a feedback signal transmitted by the terminal device 40. The distributed antenna 31-i outputs the received radio waves as an analog signal to the main device 32-i. The main device 32-i converts the analog signal including the feedback signal into a digital signal and outputs the digital signal to the digital signal processing device 20. The digital signal processing device 20 detects and acquires the feedback signal included in the digital signal output by the main device 32-i. The digital signal processing device 20 outputs the acquired feedback signal to the feedback signal receiving unit 12 of the communication control device 10. The feedback signal receiving unit 12 receives the feedback signal output by the digital signal processing device 20, and outputs the received feedback signal to the beam combination history generation unit 13 set as an output destination.

The beam combination history generation unit 13 determines whether the feedback signal including the distributed antenna ID of the i-th distributed antenna 31-i as the source antenna ID has been received before the time measured by the feedback signal timer reaches the time set in the feedback signal timer and the feedback signal timer expires (step Sa2).

If the beam combination history generation unit 13 determines that the feedback signal including the distributed antenna ID of the i-th distributed antenna 31-i as the source antenna ID has been received before the feedback signal timer expires (step Sa2, Yes), the beam combination history generation unit 13 sets the beam ID included in the received feedback signal as the beam ID indicating the best beam for the i-th distributed antenna device 30-i. The beam combination history generation unit 13 writes and records data which is a combination of the beam ID and the source antenna ID included in the received feedback signal into an internal storage area (step Sa3).

On the other hand, it is assumed that the beam combination history generation unit 13 determines that the feedback signal including the distributed antenna ID of the i-th distributed antenna 31-i as the source antenna ID has not been received before the feedback signal timer expires (step Sa2, No). Here, examples of the case where the beam combination history generation unit 13 did not receive the feedback signal include: a case where there is no line of sight between the i-th distributed antenna 31-i and the terminal device 40, and the beam transmitted by the i-th distributed antenna 31-i has not reached the terminal device 40; a case where the beam transmitted by the i-th distributed antenna 31-i has reached the terminal device 40, but since the reception level of the beam that reached the terminal device 40 is lower than the reception sensitivity of the terminal device 40, the analog signal transmitting/receiving unit 42 of the terminal device 40 could not demodulate and discards the signal; a case where since the reception level of the radio wave carrying the feedback signal transmitted by the terminal device 40 is lower than the reception sensitivity of the distributed antenna device 30-i, the main device 32-i could not demodulate and discards the received signal; and a case where transmission of radio waves carrying the feedback signal is delayed due to internal processing of the terminal device 40, and the feedback signal receiving unit 12 outputs the feedback signal to the beam combination history generation unit 13 after the feedback signal timer expires.

After the processing of step Sa3 or after determining "No" in the processing of step Sa2, if the value of i at that time is not N (here, N=4), the beam combination history generation unit 13 performs the processing of steps Sa1 to Sa3 again with the value obtained by adding 1 to i as a new value of i (loop La1s to La1e). If the value of i at that time is N (here, N=4), the beam combination history generation unit 13 ends the processing of loop Lals to Lale. The beam combination history generation unit 13 reads all the data written in the internal storage area, and after reading, deletes all the data from the internal storage area. The beam combination history generation unit 13 generates a record indicating the best beam combination in the distributed antenna devices 30-1 to 30-4 based on all the read data (step Sa4).

The beam combination history generation unit 13 detects the number of records that match the beam ID combinations included in the generated records from the beam ID combinations of the records already recorded in the beam combination history table 140, and determines whether the detected number is less than a predetermined number of records (step Sa5). When the beam combination history generation unit 13 determines that the detected number is less than the predetermined number of records (step Sa5, No), the beam combination history generation unit 13 generates a new row in the beam combination history table 140. The beam combination history generation unit 13 generates a new record ID. The beam combination history generation unit 13 writes the generated new record ID in the "record ID" item on a new row. The beam combination history generation unit 13 writes the corresponding beam ID in each element of "distributed antenna ID#1", "distributed antenna ID#2", "distributed antenna ID#3", and "distributed antenna ID#4" in the new row based on the combination of the source antenna ID and the beam ID (step Sa6). After that, the beam combination history generation unit 13 performs the processing of loop La1s to La1e again as the processing of the next trial cycle.

On the other hand, it is assumed that the beam combination history generation unit 13 determines that the detected number is not less than the predetermined number of records (step Sa5, Yes). In this case, it can be considered that a sufficiently large number of best beam combination patterns in the distributed antenna devices 30-1 to 30-4 are obtained within the range in which the terminal device 40 moves within the cell 100 during the beam combination generation processing. Therefore, the beam combination history generation unit 13 ends the processing. Note that, if there are a plurality of records with the same combination of beam IDs stored in the beam combination history table 140 before the processing ends, the beam combination history generation unit 13 may leave any one record and delete the other records. In addition, in the beam combination generation processing, if it is also allowable that a sufficiently large number of best beam combination patterns in the distributed antenna devices 30-1 to 30-4 are not obtained, the beam combination history generation unit 13 may perform the following instead of the determination in step Sa5. The processing of step Sa6 may be performed until the number of records stored in the beam combination history table 140 reaches a predetermined number of records, and when the number of records reaches the predetermined number of records, determination processing for ending the processing shown in Fig. 9 may be performed. By doing so, the beam search processing in step S2 in Fig. 8 can be started when the number of records stored in the beam combination history table 140 reaches a predetermined number of records.

As a result, for example, when the beam combination history generation unit 13 repeats the processing of loop Lals to Lale M times, that is, when M trial cycles have ended, M records are generated in the beam combination history table 140 as shown in Fig. 4. In addition, in the beam combination history table 140 shown in Fig. 4, no beam ID is written in "record ID#2", "record ID#4", and "record ID#6" of "distributed antenna ID#3". This is because one of the above-mentioned events of the case where the beam combination history generation unit 13 could not receive the feedback signal in the trial cycles of "record ID#2", "record ID#4", and "record ID#6". This indicates that the beam combination history generation unit 13 was unable to acquire the feedback signal from the all-beam search performed by the distributed antenna device 30-3 corresponding to "distributed antenna ID#3".

### (Beam search processing of first embodiment)

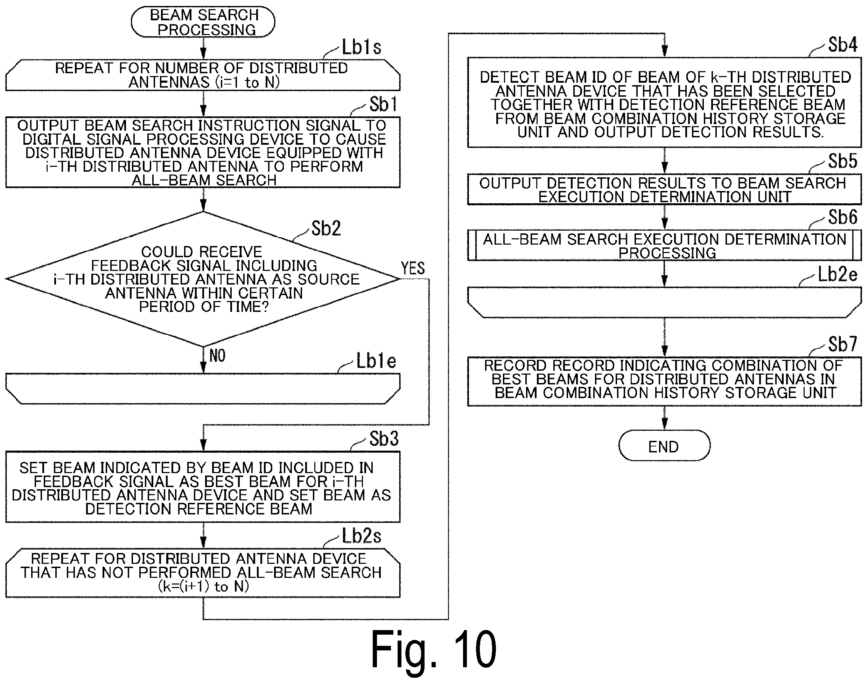

Fig. 10 is a flowchart showing the flow of the beam search processing performed in the processing of step S2 in Fig. 8. As a premise for starting the beam search processing shown in Fig. 8, it is assumed that the beam combination history table 140 shown in Fig. 4 has been generated in the beam combination history storage unit 14.

In response to an operation of the operator of the wireless communication system 1, the candidate beam detection unit 15 of the communication control device 10 starts beam search processing. The candidate beam detection unit 15 starts an internal beam search cycle timer. When starting the beam search cycle timer, the candidate beam detection unit 15 sets a time indicating the length of one predetermined beam search cycle.

The candidate beam detection unit 15 reads all distributed antenna IDs written in the distributed antenna ID item of the beam combination history table 140 stored in the beam combination history storage unit 14. The candidate beam detection unit 15 provides a counter i in its internal storage area and initializes it to i=1. Here, i is an integer value from 1 to N. The wireless communication system in Fig. 1 includes four distributed antenna devices 30-1 to 30-4, and the candidate beam detection unit 15 reads four distributed antenna IDs, "distributed antenna ID#1", "distributed antenna ID#2", "distributed antenna ID#3", and "distributed antenna ID#4" from the beam combination history table 140. In the following description, it is assumed that N=4. The following description will be made assuming that the i-th distributed antenna device is a distributed antenna device 30-i, the i-th distributed antenna is a distributed antenna 31-i, and the i-th main device is a main device 32-i.

The candidate beam detection unit 15 outputs an output destination switching instruction signal to the feedback signal receiving unit 12 to set the output destination to the candidate beam detection unit 15. When the feedback signal receiving unit 12 receives an output destination switching instruction signal from the candidate beam detection unit 15 that sets the output destination to the candidate beam detection unit 15, the feedback signal receiving unit 12 sets the candidate beam detection unit 15 as the output destination of the feedback signal.

The candidate beam detection unit 15 performs the following processing when i=1. That is, in order to cause the distributed antenna device 30-1 including the first distributed antenna 31-1 to perform an all-beam search, the candidate beam detection unit 15 outputs an all-beam search request signal including "distributed antenna ID#1" which is the distributed antenna ID assigned to the first distributed antenna 31-1 to the beam search execution instruction unit 11. After outputting the all-beam search request signal to the beam search execution instruction unit 11, the candidate beam detection unit 15 starts an internal feedback signal timer. When starting the feedback signal timer, the candidate beam detection unit 15 sets the same time as that set in the feedback signal timer by the beam combination history generation unit 13 in the processing of step Sa1 in Fig. 9. Note that this time is a predetermined time and is set in the candidate beam detection unit 15 in advance. When the beam search execution instruction unit 11 receives the all-beam search request signal output by the candidate beam detection unit 15, the processing after the beam search execution instruction unit 11 receives the all-beam search request signal in the processing of step Sa1 of Fig. 9 is performed by the beam search execution instruction unit 11, the digital signal processing device 20, the main device 32-1, the distributed antenna 31-1, and the terminal device 40 with i=1 (step Sb1 when i=1).

The candidate beam detection unit 15 determines whether the feedback signal including "distributed antenna ID#1", which is the distributed antenna ID of the first distributed antenna 31-1 as the source antenna ID has been received before the feedback signal timer expires (step Sb2 when i=1).

Here, it is assumed that one of the events of the case where the beam combination history generation unit 13 could not receive the feedback signal has occurred. In this case, the candidate beam detection unit 15 determines that the feedback signal including "distributed antenna ID#1", which is the distributed antenna ID of the first distributed antenna 31-1 as the source antenna ID has not been received before the feedback signal timer expires (step Sb2, No). If the value of i at that time is not N (here, N=4), the candidate beam detection unit 15 sets the value obtained by adding 1 to i as a new value of i, and performs the processing in steps Sb1 and Sb2 again (loop Lb1s to Lb1e). Here, since the value of i at that time is "1", the candidate beam detection unit 15 sets "2" as the new value of i.

When i=2, the candidate beam detection unit 15 performs the following processing as the second processing of loop Lb1s to Lb1e. That is, in order to cause the distributed antenna device 30-2 including the second distributed antenna 31-2 to perform an all-beam search, the candidate beam detection unit 15 outputs an all-beam search request signal including "distributed antenna ID#2", which is the distributed antenna ID assigned to the second distributed antenna 31-2 to the beam search execution instruction unit 11. After outputting the all-beam search request signal to the beam search execution instruction unit 11, the candidate beam detection unit 15 starts an internal feedback signal timer. When starting the feedback signal timer, the candidate beam detection unit 15 sets the same time as that set in the feedback signal timer by the beam combination history generation unit 13 in the processing of step Sa1 in Fig. 9. When the beam search execution instruction unit 11 receives the all-beam search request signal output by the candidate beam detection unit 15, the processing after the beam search execution instruction unit 11 receives the all-beam search request signal in the processing of step Sa1 in Fig. 9 is performed by the beam search execution instruction unit 11, the digital signal processing device 20, the main device 32-2, the distributed antenna 31-2, and the terminal device 40 with i=2 (steps Sb1 when i=2).

The candidate beam detection unit 15 determines whether the feedback signal including "distributed antenna ID#2", which is the distributed antenna ID of the second distributed antenna 31-2 as the source antenna ID has been received before the feedback signal timer expires (step Sb2 when i=2). Here, it is assumed that any of the above-described events of the case where the beam combination history generation unit 13 could not receive the feedback signal has not occurred, and the feedback signal receiving unit 12 outputs the feedback signal to the candidate beam detection unit 15. In this case, the candidate beam detection unit 15 determines that the feedback signal including "distributed antenna ID#2", which is the distributed antenna ID of the second distributed antenna 31-2, as the source antenna ID has been received before the feedback signal timer expires (step Sb2 when i=2, Yes).

The candidate beam detection unit 15 exits the processing of loop Lb1s to Lb1e and sets the beam ID included in the received feedback signal as the beam ID indicating the best beam for the second distributed antenna device 30-2. The candidate beam detection unit 15 sets the beam identified by the beam ID and "distributed antenna ID#2" which is the source antenna ID included in the feedback signal as a detection reference beam. Here, it is assumed that the beam ID included in the feedback signal received by the candidate beam detection unit 15 is "beam ID#33".

The candidate beam detection unit 15 combines the source antenna ID, beam ID, and reception power value included in the feedback signal into one set of data, and outputs the one set of data to the beam combination recording unit 17. The beam combination recording unit 17 receives the one set of data output by the candidate beam detection unit 15. The candidate beam detection unit 15 outputs an output destination switching instruction signal to the feedback signal receiving unit 12 to set the output destination to the beam search execution determination unit 16. When the feedback signal receiving unit 12 receives an output destination switching instruction signal from the candidate beam detection unit 15 to set the output destination to the beam search execution determination unit 16, the feedback signal receiving unit 12 sets the output destination of the feedback signal to the beam search execution determination unit 16 (step Sb3).

To put it another way about the processing in steps Sb2 and Sb3 above, the candidate beam detection unit 15 performs processing of causing all the distributed antenna devices 30-1 to 30-4 to perform an all-beam search in order, and when one feedback signal is received during processing, the candidate beam detection unit 15 ends the processing of loop Lb1s to Lb1e and sets the beam identified by the source antenna ID and beam ID included in the received feedback signal as the detection reference beam.

At this time, there are only two distributed antenna devices 30-3 and 30-4 that have not performed the all-beam search in the beam search period. If the wireless communication system 1 includes N distributed antenna devices 30-1 to 30-N, the number of distributed antenna devices 30-1 to 30-N that have not performed the all-beam search is represented by N-i using the value of i at the time of exiting loop Lb1s to Lb1e and the value of N. The candidate beam detection unit 15 provides a counter k in an internal storage area and initializes it to k=i+1. k is an integer value from (i+1) to N, and here, k takes values of "3" and "4".

The candidate beam detection unit 15 performs the following processing when k=3. That is, the candidate beam detection unit 15 detects the beam of the third distributed antenna device 30-3, which has been selected together with the detection reference beam, as a candidate beam from the beam combination history table 140. Here, the detection reference beam is a beam identified by "beam ID#33" of "distributed antenna ID#2". In the beam combination history table 140, "beam ID#33" of "distributed antenna ID#2" corresponding to the detection reference beam is included in "record ID#2", "record ID#4", and "record ID#6". However, the "distributed antenna ID#3" items of "record ID#2", "record ID#4", and "record ID#6" are blank. Therefore, the candidate beam detection unit 15 outputs detection results that there is no candidate beam ID indicating a candidate beam that is a beam of the third distributed antenna device 30-3 and has been selected together with the detection reference beam. The candidate beam detection unit 15 generates data indicating detection results including only "distributed antenna ID#3" (step Sb4 when k=3).

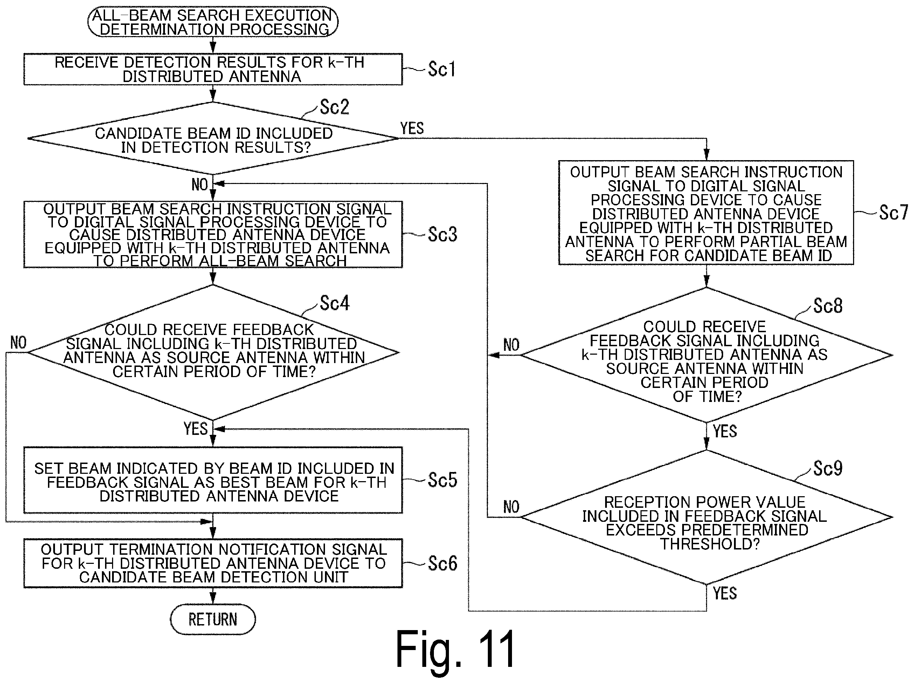

The candidate beam detection unit 15 outputs data indicating the detection results including only "distributed antenna ID#3" to the beam search execution determination unit 16 (step Sb5 when k=3). When the beam search execution determination unit 16 receives data indicating the detection results from the candidate beam detection unit 15, the beam search execution determination unit 16 starts a subroutine for all-beam search execution determination processing shown in Fig. 11 (step Sb6 when k=3).

The beam search execution determination unit 16 receives data indicating the detection results output by the candidate beam detection unit 15 (step Sc1 when k=3). The beam search execution determination unit 16 determines whether the candidate beam ID is included in the received data indicating the detection results (step Sc2 in the case of k=3). Here, since the candidate beam ID is not included in the data indicating the detection results, the beam search execution determination unit 16 determines that the candidate beam ID is not included in the received data indicating the detection results (step Sc2 when k=3, No).

The processing of steps Sc3 to Sc6 will be explained below. The beam search execution determination unit 16 reads the "distributed antenna ID#k" included in the data indicating the detection results, and outputs an all-beam search request signal including "distributed antenna ID#k" to the beam search execution instruction unit 11 in order to cause the distributed antenna device 30-k including the k-th distributed antenna 31-k to perform an all-beam search based on the read "distributed antenna ID#k". After outputting the all-beam search request signal to the beam search execution instruction unit 11, the beam search execution determination unit 16 starts an internal feedback signal timer. When starting the feedback signal timer, the beam search execution determination unit 16 sets the same time as that set in the feedback signal timer by the beam combination history generation unit 13 in the processing of step Sa1 in Fig. 9. Note that this time is a predetermined time, and is set in advance in the beam search execution determination unit 16. When the beam search execution instruction unit 11 receives the all-beam search request signal output by the beam search execution determination unit 16, the processing after the beam search execution instruction unit 11 receives the all-beam search request signal in the processing of step Sa1 in Fig. 9 is performed by the beam search execution instruction unit 11, the digital signal processing device 20, the main device 32-k, the distributed antenna 31-k, and the terminal device 40 with i=k (step Sc3).

The beam search execution determination unit 16 determines whether the feedback signal including "distributed antenna ID#k", which is the distributed antenna ID of the k-th distributed antenna 31-k, as the source antenna ID has been received before the feedback signal timer expires (step Sc4).

For example, it is assumed that any of the above-described events of the case where the beam combination history generation unit 13 could not receive the feedback signal has not occurred, and the feedback signal receiving unit 12 outputs the feedback signal to the beam search execution determination unit 16. In this case, the beam search execution determination unit 16 determines that the feedback signal including "distributed antenna ID#k", which is the distributed antenna ID of the k-th distributed antenna 31-k, as the source antenna ID has been received before the feedback signal timer expires (step Sc4, Yes). The beam search execution determination unit 16 sets the beam ID included in the feedback signal as the beam ID indicating the best beam for the k-th distributed antenna device 30-k. The beam search execution determination unit 16 combines the source antenna ID, beam ID, and reception power value included in the feedback signal into one set of data, and outputs the one set of data to the beam combination recording unit 17. The beam combination recording unit 17 receives the one set of data output by the beam search execution determination unit 16 (step Sc5).

On the other hand, it is assumed that one of the above-mentioned events of the case where the beam combination history generation unit 13 could not receive the feedback signal has occurred. In this case, the beam search execution determination unit 16 determines that the feedback signal including "distributed antenna ID#k", which is the distributed antenna ID of the k-th distributed antenna 31-k, as the source antenna ID has been received before the feedback signal timer expires (step Sc4, No).

After the processing in step Sc5 or after determining "No" in the processing in step Sc4, the beam search execution determination unit 16 outputs a termination notification signal indicating that the processing for the k-th distributed antenna device 30-k has ended and including the value of the counter k to the candidate beam detection unit 15 (step Sc6), and ends the subroutine processing.

Returning to Fig. 10, when the candidate beam detection unit 15 receives the termination notification signal output from the beam search execution determination unit 16, if the value of k at that time is not N (here, N=4), the candidate beam detection unit 15 performs the processing of steps Sb4 to Sb6 again using the value obtained by adding 1 to the value of k as a new value of k (loop Lb2s to Lb2e). Here, since the value of k at that time is "3", the candidate beam detection unit 15 sets "4" as the new value of k.

The candidate beam detection unit 15 performs the following processing when k=4. That is, the candidate beam detection unit 15 detects the beam ID of the beam of the fourth distributed antenna device 30-4 that has been selected together with the detection reference beam from the beam combination history table 140. Here, the detection reference beam is a beam identified by "beam ID#33" of "distributed antenna ID#2". In the beam combination history table 140, "beam ID#33" of "distributed antenna ID#2" corresponding to the detection reference beam is included in "record ID#2", "record ID#4", and "record ID#6". "record ID#2", "record ID#4", and "record ID#6" are written in the "distributed antenna ID#4" items of "beam ID#15", "beam ID#16", and "beam ID#15".

Therefore, the candidate beam detection unit 15 detects "beam ID#15" and "beam ID#16" from the beam combination history table 140 as the beam ID of the beam of the fourth distributed antenna device 30-4 that has been selected together with the detection reference beam. The candidate beam detection unit 15 sets "beam ID#15" and "beam ID#16" as candidate beam IDs indicating the candidate beams of the distributed antenna device 30-4 corresponding to "distributed antenna ID#4". The candidate beam detection unit 15 generates data indicating detection results including "distributed antenna ID#4", and candidate beam IDs "beam ID#15" and "beam ID#16" (step Sb4 when k=4). The candidate beam detection unit 15 outputs data indicating the generated detection results to the beam search execution determination unit 16 (step Sb5 when k=4). When the beam search execution determination unit 16 receives data indicating the detection results from the candidate beam detection unit 15, the beam search execution determination unit 16 starts a subroutine for all-beam search execution determination processing shown in Fig. 11 (step Sb6 when k=4).

The beam search execution determination unit 16 receives data indicating the detection results output by the candidate beam detection unit 15 (step Sc1 when k=4). The beam search execution determination unit 16 determines whether the candidate beam ID is included in the received data indicating the detection results (step Sc2 when k=4). Here, since the data indicating the detection results includes "beam ID#15" and "beam ID#16", the beam search execution determination unit 16 determines that the candidate beam ID is included in the data indicating the received detection results (step Sc2 when k=4, Yes).

The beam search execution determination unit 16 outputs a partial beam search request signal including "distributed antenna ID#4", "beam ID#15", and "beam ID#16" to the beam search execution instruction unit 11 in order to cause the distributed antenna device 30-4 including the fourth distributed antenna 31-4 to perform a partial beam search. After outputting the partial beam search request signal to the beam search execution instruction unit 11, the beam search execution determination unit 16 starts an internal feedback signal timer. When starting the feedback signal timer, the beam search execution determination unit 16 sets the same time as that set in the feedback signal timer by the beam combination history generation unit 13 in the processing of step Sa1 in Fig. 9.

The beam search execution instruction unit 11 receives the partial beam search request signal output by the beam search execution determination unit 16, and reads "distributed antenna ID#4", "beam ID#15", and "beam ID#16" included in the partial beam search request signal. The beam search execution instruction unit 11 generates a beam search instruction signal including "distributed antenna ID#4" and "beam ID#15", and a beam search instruction signal including "distributed antenna ID#4" and "beam ID#16". The beam search execution instruction unit 11 outputs the two generated beam search instruction signals one by one to the digital signal processing device 20 at predetermined fixed time intervals in the order of generation. The digital signal processing device 20 sequentially receives the two beam search instruction signals output by the beam search execution instruction unit 11. Thereafter, the processing after the digital signal processing device 20 receives the beam search instruction signal in the processing of step Sa1 in Fig. 9, is performed by the digital signal processing device 20, the main device 32-4, the distributed antenna 31-4, and the terminal device 40 with i=4 (step Sc7 when k=4).

The beam search execution determination unit 16 determines whether a feedback signal including "distributed antenna ID#4", which is the distributed antenna ID of the fourth distributed antenna 31-4, as the source antenna ID has been received before the feedback signal timer expires (step Sc8).

For example, it is assumed that one of the above-mentioned events of the case where the beam combination history generation unit 13 could not receive the feedback signal has occurred. In this case, the beam search execution determination unit 16 determines that the feedback signal including "distributed antenna ID#4", which is the distributed antenna ID of the fourth distributed antenna 31-4, as the source antenna ID has not been received before the feedback signal timer expires (step Sc8 when k=4, No), and the processing proceeds to step Sc3.

On the other hand, it is assumed that any of the above-described events of the case where the beam combination history generation unit 13 could not receive the feedback signal has not occurred, and the feedback signal receiving unit 12 outputs the feedback signal to the beam search execution determination unit 16. In this case, the beam search execution determination unit 16 determines that the feedback signal including "distributed antenna ID#4", which is the distributed antenna ID of the fourth distributed antenna 31-4, as the source antenna ID has been received before the feedback signal timer expires (step Sc8 when k=4, Yes).

In this case, the beam search execution determination unit 16 determines whether the reception power value included in the feedback signal exceeds a predetermined threshold (step Sc9 when k=4). When the beam search execution determination unit 16 determines that the reception power value included in the feedback signal does not exceed a predetermined threshold (step Sc9 when k=4, No), the processing proceeds to step Sc3. On the other hand, if the beam search execution determination unit 16 determines that the reception power value included in the feedback signal exceeds the predetermined threshold (step Sc9 when k=4, Yes), the processing proceeds to step Sc5.

To put it another way about the processing of steps Sc7, Sc8, and Sc9, the beam search execution determination unit 16 performs a partial beam search to cause the distributed antenna device 30-4 corresponding to "distributed antenna ID#4" to transmit a beam corresponding to "beam ID#15" and a beam corresponding to "beam ID#16". If no feedback signal is obtained by the partial beam search, the beam search execution determination unit 16 advances the processing to step Sc3 and causes the distributed antenna device 30-4 corresponding to "distributed antenna ID#4" to perform an all-beam search to search for the best beam for the distributed antenna device 30-4 again.

On the other hand, if a feedback signal is obtained by the partial beam search, when the reception power value included in the feedback signal, that is, the reception power value of the beam selected as the best beam for the terminal device 40, does not exceed the threshold, the beam search execution determination unit 16 determines that the beam indicated by the feedback signal is an inappropriate beam that cannot be used for normal operation. Therefore, the beam search execution determination unit 16 advances the processing to step Sc3 and causes the distributed antenna device 30-4 corresponding to "distributed antenna ID#4" to perform an all-beam search to search for the best beam for the distributed antenna device 30-4 again.

On the other hand, when the reception power value included in the feedback signal exceeds the threshold, the beam search execution determination unit 16 determines that the beam is the best beam for the distributed antenna device 30-4. In this case, since the beam search execution determination unit 16 can determine that the beam is an appropriate beam that can be used for normal operation without performing an all-beam search for the distributed antenna device 30-4, the number of beam searches can be reduced. By proceeding to step Sc5, the beam search execution determination unit 16 sets the data regarding the beam as data to be added to the beam combination history table 140.

Returning to Fig. 10, when the candidate beam detection unit 15 receives the termination notification signal output from the beam search execution determination unit 16, if the value of k at that time is N (here, N=4), the candidate beam detection unit 15 ends the processing of loop Lb2s to Lb2e, and advances the processing to step Sb7.

The beam combination recording unit 17 removes the reception power value from the set of data received in the processing of step Sb3 and the processing of step Sc5, that is, the data that is a combination of the source antenna ID, beam ID, and reception power value, and generates one record in the beam combination history table 140 based on the remaining data. That is, the beam combination recording unit 17 generates a new row in the beam combination history table 140, thereby generating "record ID#M+1" as a new record ID. The beam combination recording unit 17 writes "record ID#M+1" which is the generated new record ID in the "record ID" item of the generated new row. The beam combination recording unit 17 records the corresponding beam ID in each element of "distributed antenna ID#1", "distributed antenna ID#2", "distributed antenna ID#3", and "distributed antenna ID#4" in the row of "record ID#M+1" based on the combination of the source antenna ID and the beam ID (step Sb7).

In the wireless communication system 1 of the first embodiment described above, the candidate beam detection unit 15 causes each of the plurality of distributed antennas 31-1 to 31-4 to perform an all-beam search performed by transmitting beams in all transmittable directions in a beam search period for searching for a beam to be used for wireless communication with the terminal device 40. When the candidate beam detection unit 15 acquires one beam identifier indicating the best beam among the beams used for the all-beam search, the candidate beam detection unit 15 stops the all-beam search and sets a beam identified by the acquired beam identifier and the information indicating the distributed antennas 31-1 to 31-4 that have transmitted the beam indicated by the beam identifier as a detection reference beam. The candidate beam detection unit 15 detects, from the beam combination history storage unit 14, beam identifiers of the distributed antennas 31-1 to 31-4 that have not been performed the all-beam search in the beam search period and have been selected together with the detection reference beam as candidate beam identifiers for the distributed antennas 31-1 to 31-4. The beam search execution determination unit 16 determines whether to cause the distributed antennas 31-1 to 31-4 that have not performed the all-beam search in the beam search period to perform an all-beam search based on the detection results from the candidate beam detection unit 15. The beam combination recording unit 17 generates a record indicating a combination of beam identifiers indicating beams determined to be the best beams for the distributed antennas in the beam search period. The beam combination recording unit 17 records the generated record in the beam combination history storage unit. As a result, it is possible to obtain an effect that in the beam combination generation processing performed by the beam combination history generation unit 13, even when it is not possible to generate sufficient records indicating the history of beam combinations while moving the terminal device 40 little by little at intervals that do not reduce the transmission capacity throughout the cell 100 in the service providing area, it is possible to store a sufficiently large number of records to reduce the number of beam searches without reducing transmission capacity when performing beam search processing.

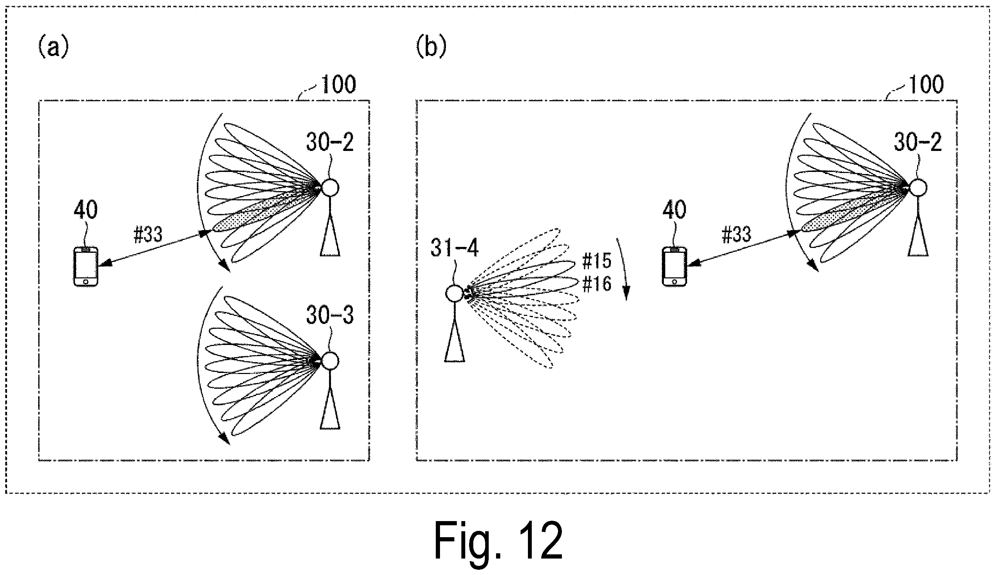

The contents of the beam search processing in the first embodiment will be summarized with reference to Fig. 12. Regarding the distributed antenna device 30-1, in the processing of step Sb2 when i=1, the candidate beam detection unit 15 could not acquire a feedback signal before the feedback signal timer expires through the all-beam search performed by the distributed antenna device 30-1. This means that the beam cannot be searched. Regarding the distributed antenna device 30-2, in the processing of step Sb2 when i=2, the candidate beam detection unit 15 can acquire a feedback signal through the all-beam search performed by the distributed antenna device 30-2. This means that the beam indicated by the beam ID "beam ID#33" included in the acquired feedback signal can be searched as the best beam for the distributed antenna device 30-2.

Regarding the distributed antenna device 30-3, the candidate beam detection unit 15 cannot detect, from the beam combination history table 140, the beam ID of a beam that has been selected together with "beam ID#33", which is the best beam for the distributed antenna device 30-2. Therefore, as shown in Fig. 12(a), the beam search execution determination unit 16 proceeds to the processing of step Sc3 in Fig. 11 and causes the distributed antenna device 30-3 to perform an all-beam search. If the beam search execution determination unit 16 could acquire a feedback signal through the all-beam search performed by the distributed antenna device 30-3, it is possible to search for the best beam for the distributed antenna device 30-3. If the feedback signal could not be acquired, it will not be possible to search for the best beam for the distributed antenna device 30-3.

Regarding the distributed antenna device 30-4, the candidate beam detection unit 15 can detect, from the beam combination history table 140, "beam ID#15", and "beam ID#16" as the beam IDs of beams that have been selected together with "beam ID#33" which is the best beam for the distributed antenna device 30-2. Therefore, as shown in Fig. 12(b), the beam search execution determination unit 16 causes distributed antenna device 30-4 to perform a partial beam search using the beams indicated by "beam ID#15" and "beam ID#16" as candidate beams in step Sc7 of Fig. 11. If the beam search execution determination unit 16 has acquired a feedback signal through the partial beam search by the distributed antenna device 30-4, and the reception power value included in the acquired feedback signal exceeds a predetermined threshold, it is possible to search the beam ID included in the feedback signal as the best beam for the distributed antenna device 30-4. On the other hand, if the beam search execution determination unit 16 could not acquire the feedback signal through the partial beam search by the distributed antenna device 30-4, or if the feedback signal is acquired and the reception power value included in the feedback signal does not exceed a predetermined threshold, the beam search execution determination unit 16 proceeds to step Sc3 in Fig. 11 and causes the distributed antenna device 30-4 to perform an all-beam search. If the beam search execution determination unit 16 could acquire a feedback signal through the all-beam search by the distributed antenna device 30-4, it is possible to search for the best beam for the distributed antenna device 30-4. If the abnormality could not be acquired, the best beam for the antenna device 30-4 cannot be searched for.

Therefore, the all-beam search processing performed in the processing of steps Sb1 and Sb2 in Fig. 10 and the processing of steps Sc3 and Sc4 in Fig. 11 can be said to be processing for covering the lack of records when a sufficiently large number of records are not recorded in the beam combination history table 140 by the beam combination generation processing of the beam combination history generation unit 13. On the other hand, the partial beam search processing performed in the processing of steps Sc7 to Sc9 in Fig. 11 is processing for searching for beams while reducing the number of beam searches. However, if a sufficiently large number of records are not recorded in the beam combination history table 140, when candidate beams are narrowed down, the best beam may not be included in the narrowed-down candidate beams, resulting in a reduction in transmission capacity. In such a case, the processing proceeds to step Sc3 to perform an all-beam search to newly select the best beam. As a result, even if a sufficiently large number of records are not recorded in the beam combination history table 140, it is possible to store a number of records sufficient for reducing the number of beam searches without reducing transmission capacity when performing beam search processing.

### (Second Embodiment)

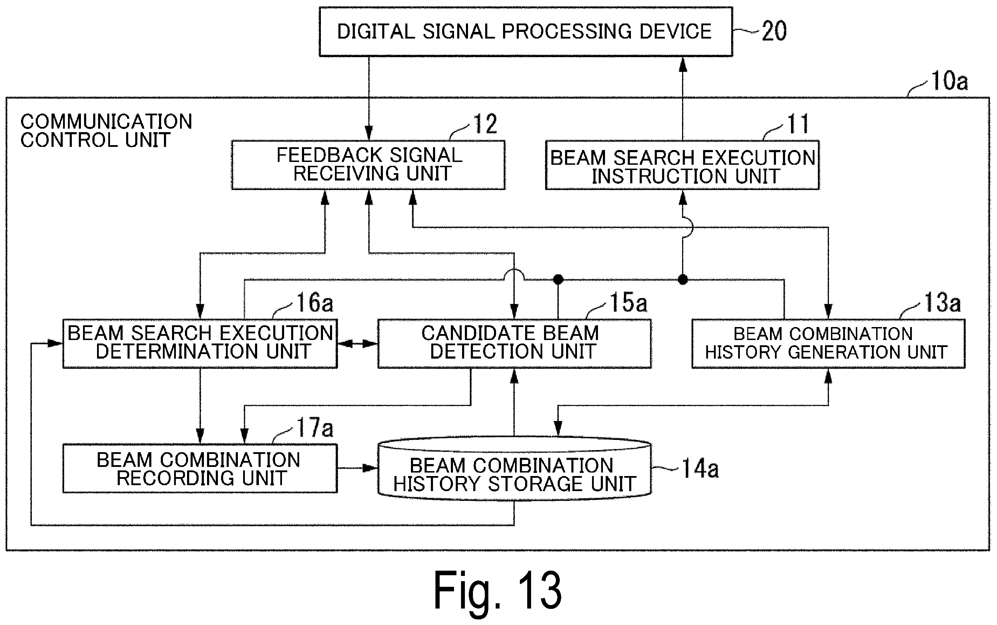

Fig. 13 is a block diagram showing the configuration of a communication control device 10a according to the second embodiment. The communication control device 10a is a device used in place of the communication control device 10 of the first embodiment. Hereinafter, for convenience of explanation, the wireless communication system 1 including the communication control device 10a instead of the communication control device 10 will be referred to as a wireless communication system 1a. In the communication control device 10a, the same components as the communication control device 10 of the first embodiment are given the same reference numerals, and different components will be explained below.

The communication control device 10a includes a beam search execution instruction unit 11, a feedback signal receiving unit 12, a beam combination history generation unit 13a, a beam combination history storage unit 14a, a candidate beam detection unit 15a, a beam search execution determination unit 16a, and a beam combination recording unit 17a.

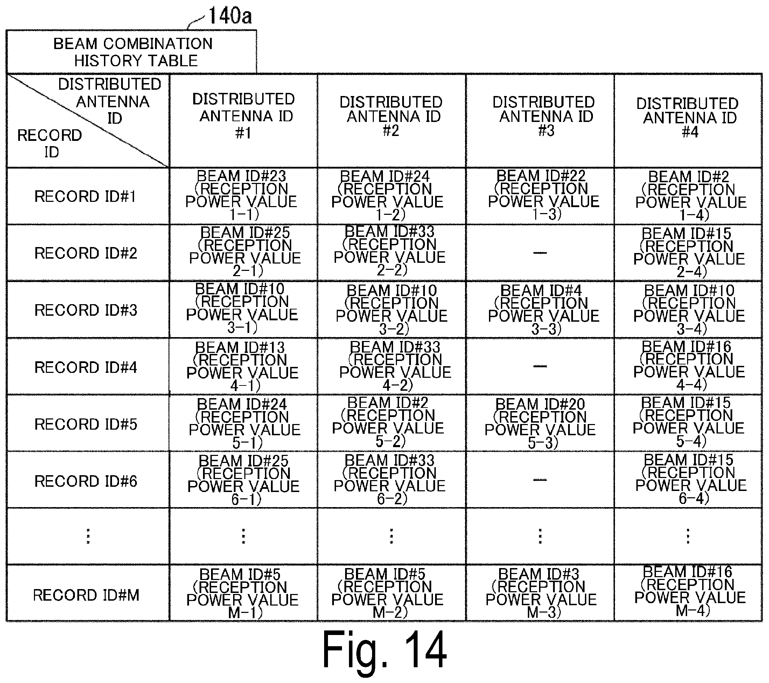

The beam combination history storage unit 14a stores a beam combination history table 140a shown in Fig. 14. The beam combination history table 140a has the same data format as the beam combination history table 140 of the first embodiment shown in Fig. 4, except that the data written to the elements is different. The beam combination history table 140 of the first embodiment has a data structure in which only beam IDs are written as elements. In contrast, in the beam combination history table 140a of the second embodiment, a beam ID and a reception power value measured by the terminal device 40 when the terminal device 40 receives the beam indicated by the beam ID are written as elements. Note that, as the reception power value, for example, a numerical value expressed in the unit of "dBm" is written.

The beam combination history generation unit 13a has the same configuration as the beam combination history generation unit 13 of the first embodiment except for the configuration described below. In the processing of step Sa3 in Fig. 9, the beam combination history generation unit 13 of the first embodiment writes and records data which is a combination of the beam ID and the source antenna ID included in the received feedback signal into an internal storage area. On the other hand, in the processing of step Sa3 of Fig. 9, the beam combination history generation unit 13a of the second embodiment adds the reception power value included in the received feedback signal and writes and records data which is a combination of the source antenna ID, the beam ID, and the reception power value into an internal storage area.

The record that the beam combination history generation unit 13 of the first embodiment generates in the processing of step Sa4 in Fig. 9 does not include the reception power value. In contrast, the beam combination history generation unit 13a of the second embodiment generates a record in which the reception power value is added to the source antenna ID and beam ID in the processing of step Sa4 in Fig. 9. Therefore, in the processing of step Sa6, the beam combination history generation unit 13a writes a record including the reception power value into the beam combination history table 140a. At this time, the beam combination history generation unit 13a writes each piece of data that is a combination of the beam ID and reception power value included in the record as elements at the location specified by a row newly generated for the record in the beam combination history table 140a and the row of the source antenna ID corresponding to the data which is a combination of the beam ID and the reception power value. Note that in the first embodiment, if there are a plurality of records with the same combination of beam IDs stored in the beam combination history table 140 before the processing ends, the beam combination history generation unit 13 may leave any one record and delete the other records. In the second embodiment, even if the combinations of beam IDs are the same, since the reception power values may be different, it is necessary to leave all records written in the beam combination history table 140a.

The candidate beam detection unit 15a has the same configuration as the candidate beam detection unit 15 of the first embodiment except for the configuration described below. When detecting, from the beam combination history table 140a, the beam IDs of the distributed antenna devices 30-1 to 30-4 that have not performed the all-beam search in the beam search period and have been selected together with the detection reference beam and the distributed antenna ID corresponding to the beam IDs, the candidate beam detection unit 15a detects the reception power value written as an element together with the detected beam ID in the beam combination history table 140a. The candidate beam detection unit 15a calculates the average values of the reception power values for each beam ID based on the combination of the detected beam ID and the detected reception power value, and sets the maximum value of the calculated average values as the average reception power value for the detected distributed antenna ID. The candidate beam detection unit 15a includes the calculated average reception power value in the data indicating the detection results.

The beam search execution determination unit 16a has the same configuration as the beam search execution determination unit 16 of the first embodiment except for the configuration described below. The beam search execution determination unit 16a performs the following processing when the data indicating the detection results output by the candidate beam detection unit 15 includes the candidate beam ID. That is, the beam search execution determination unit 16a reads the average reception power value included in the data indicating the detection results, and sets a value obtained by adding a margin to the read average reception power value as a threshold for the distributed antenna ID included in the data indicating the detection results. Here, the reason why a value obtained by adding a margin to the average reception power value is set as the threshold is to allow a reception power value that is slightly smaller than the average reception power value. Specifically, the beam search execution determination unit 16a sets the value of an error occurring in the reception power value calculated in advance as a predetermined value, and sets a subtraction value obtained by subtracting the predetermined value from the average reception power value as the threshold.

The beam search execution determination unit 16a selects, from among the calculated thresholds, the threshold for the source antenna ID included in the feedback signal obtained when any of the distributed antenna devices 30-1 to 30-4 is caused to perform the partial beam search, and determines whether to cause the distributed antenna devices 30-1 to 30-4 corresponding to the source antenna ID included in the feedback signal to perform an all-beam search based on the selected threshold and the reception power value included in the feedback signal.

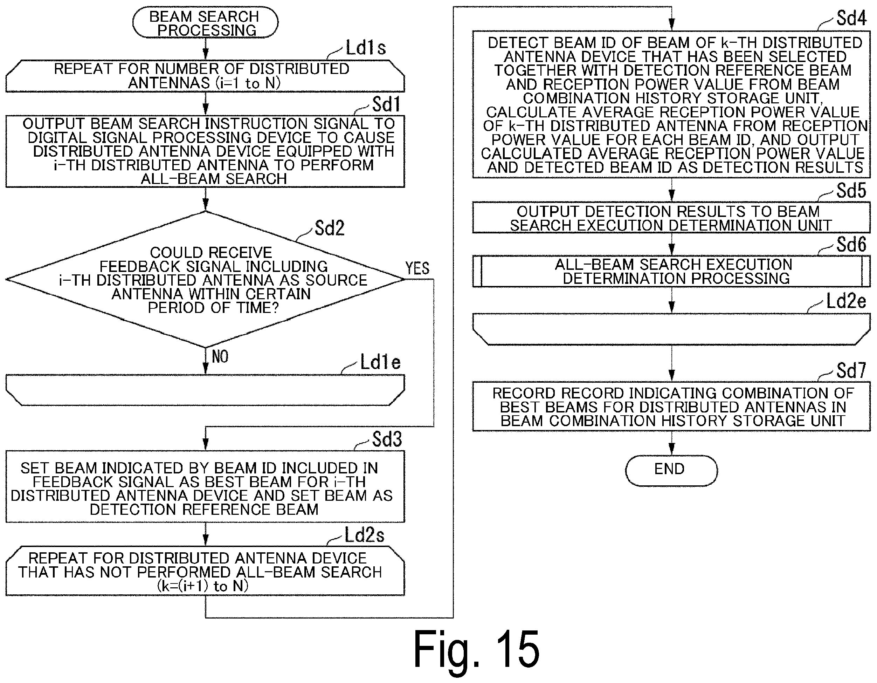

The beam combination recording unit 17a has the same configuration as the beam combination recording unit 17 of the first embodiment except for the configuration described below. In the processing of step Sb7 in Fig. 10, the beam combination recording unit 17 of the first embodiment removes the reception power value from the data that is a combination of the source antenna ID, beam ID, and reception power value, and generates one record based on the remaining data. On the other hand, in the processing of step Sd7 in Fig. 15, which corresponds to the processing in step Sb7 of Fig. 10, the beam combination recording unit 17a of the second embodiment does not remove the reception power value and generates one record from the data that is a combination of the beam ID and the reception power value. The beam combination recording unit 17a writes each piece of data that is a combination of the beam ID and reception power value included in the record as elements at the location specified by a row newly generated for the record in the beam combination history table 140a and the row of the source antenna ID corresponding to the data which is a combination of the beam ID and the reception power value.

### (Processing in wireless communication system according to second embodiment)

Similarly to the first embodiment, the wireless communication system 1a of the second embodiment performs the beam combination generation processing in step S1, the beam search processing in step S2, and the determination processing in step S3 shown in Fig. 8. However, the beam combination generation processing and beam search processing performed in the second embodiment differ from the processing performed in the first embodiment in the points described below.

### (Beam combination generation processing of second embodiment)

In the beam combination generation processing shown in Fig. 9, the same processing as in the first embodiment is performed by the beam search execution instruction unit 11, the feedback signal receiving unit 12, the digital signal processing device 20, and the distributed antenna devices 30-1 to 30-4 and the processing performed by the beam combination history generation unit 13 is performed by the beam combination history generation unit 13a, except that the processing in steps Sa3, Sa4, and Sa6 is replaced with the processing described above.

### (Beam search processing of second embodiment)

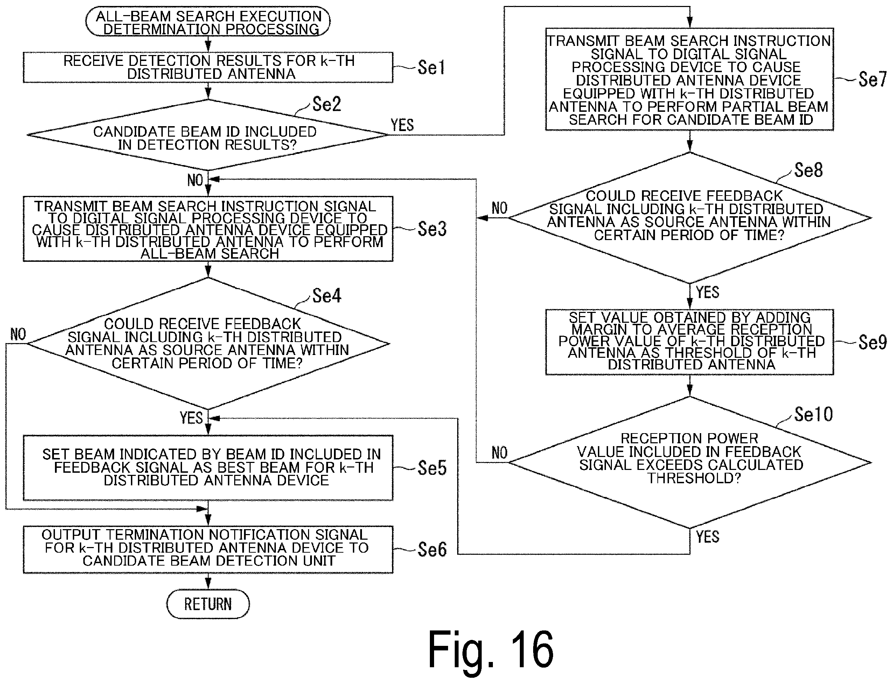

Fig. 15 is a flowchart showing the beam search processing of the second embodiment, and Fig. 16 is a flowchart showing the subroutine of the all-beam search execution determination performed in step Sd6 of Fig. 15. In Fig. 15, in the processing of steps Sd1 and Sd2, the processing of loop Ld1s to Ld1e that repeat the processing of steps Sd1 and Sd2, and the processing of step Sd3, the processing of steps Sb1 and Sb2 in Fig. 10, the processing of loop Lb1s to Lb1e that repeat the processing of steps Sb1 and Sb2, and the same processing as the processing of step Sb3 are performed by the beam search execution instruction unit 11, the feedback signal receiving unit 12, the digital signal processing device 20, and the distributed antenna devices 30-1 to 30-4, and the processing performed by the candidate beam detection unit 15 is performed by the candidate beam detection unit 15a. In the processing of step Sd7, the above-described processing is performed by the beam combination recording unit 17a.

In the processing of loop Ld2s to Ld2e, when k=3, the candidate beam detection unit 15a cannot detect the candidate beam ID corresponding to "distributed antenna ID#3" from the beam combination history table 140a as in the first embodiment. Therefore, in this case, the candidate beam detection unit 15a cannot detect the reception power value. Therefore, the candidate beam detection unit 15a does not calculate the average reception power value and outputs detection results that there is no candidate beam ID indicating a candidate beam which is the beam of the third distributed antenna device 30-3 and has been selected together with the detection reference beam similarly to the processing of step Sb4 of the first embodiment. The candidate beam detection unit 15a generates data indicating the detection results including only "distributed antenna ID#3" (step Sd4 when k=3).

The candidate beam detection unit 15a outputs data indicating the detection results including only "distributed antenna ID#3" to the beam search execution determination unit 16a (step Sb5 when k=3). When the beam search execution determination unit 16a receives data indicating the detection results from the candidate beam detection unit 15a, the beam search execution determination unit 16a starts a subroutine for all-beam search execution determination processing shown in Fig. 16 (step Sd6 when k=3).

The subroutine of the all-beam search execution determination processing performed in step Sd6 of the beam search processing of the second embodiment will be described with reference to Fig. 16. In the processing of steps Se1 to Se6, the same processing as steps Sc1 to Sc6 shown in Fig. 11 are performed by the beam search execution instruction unit 11, the feedback signal receiving unit 12, the digital signal processing device 20, and the distributed antenna devices 30-1 to 30-4, and the processing performed by the beam search execution determination unit 16 is performed by the beam search execution determination unit 16a. Therefore, in the case of k=3, the beam search execution determination unit 16a determines "No" in the determination processing of step Se2, and the processing proceeds to step Se3. After that, the same processing as in the case of k=3 in the first embodiment is performed.

Assume that the processing of loop Ld2s to Ld2e shown in Fig. 15 has progressed to the processing in the case of k=4. Similarly to the first embodiment, the candidate beam detection unit 15a detects the beam ID of the beam of the fourth distributed antenna device 30-4 that has been selected together with the detection reference beam from the beam combination history table 140a. Here, the detection reference beam is a beam identified by "beam ID#33" of "distributed antenna ID#2". In the beam combination history table 140a, "beam ID#33" of "distributed antenna ID#2" corresponding to the detection reference beam is included in "record ID#2", "record ID#4", and "record ID#6". "beam ID#15", "beam ID#16", "beam ID#15" are written in the "distributed antenna ID#4" items of "record ID#2", "record ID#4", and "record ID#6".

Therefore, the candidate beam detection unit 15a detects "beam ID#15" and "beam ID#16" as the beam ID of the beam of the fourth distributed antenna device 30-4 that has been selected together with the detection reference beam from the beam combination history table 140. The candidate beam detection unit 15a sets "beam ID#15" and "beam ID#16" as candidate beam IDs indicating the candidate beams of the distributed antenna device 30-4 corresponding to "distributed antenna ID#4".

The candidate beam detection unit 15a further detects "(reception power value 2-4)" of "record ID#2", and "(reception power value 6-4)" of "record ID6" for "beam ID#15" and detects "(reception power value 4-4)" of "record ID#4" for "beam ID#16". The candidate beam detection unit 15a calculates the average value of "(reception power value 2-4)" and "(reception power value 6-4)" corresponding to "beam ID#15". Since there is only one "(reception power value 4-4) for "beam ID#16", "(reception power value 4-4)" is taken as the average value. The candidate beam detection unit 15a sets the maximum average value of the average value corresponding to "beam ID#15" and the average value of "beam ID#16" as the average reception power value for "distributed antenna ID#4". The candidate beam detection unit 15 generates data indicating detection results including "distributed antenna ID#4", "beam ID#15", which is a candidate beam ID, "beam ID#16", and the calculated average reception power value (step Sd4 when k=4). The candidate beam detection unit 15a outputs the generated data indicating the detection results to the beam search execution determination unit 16a (step Sd5 when k=4).

In the processing of step Se1 of the subroutine for all-beam search execution determination processing in Fig. 16, which is performed in the subsequent processing of step Sd6, the beam search execution determination unit 16a receives the detection result data output by the candidate beam detection unit 15a. In the processing of step Se2, the beam search execution determination unit 16a determines that the candidate beam ID is included in the received data indicating the detection results (step Se2 when k=4, Yes).

In the processing in steps Se7 and Se8, the same processing as steps Sc7 and Sc8 in Fig. 11 is performed by the beam search execution instruction unit 11, the feedback signal receiving unit 12, the digital signal processing device 20, and the distributed antenna device 30-4, and the processing performed by the beam search execution determination unit 16 is performed by the beam search execution determination unit 16a. If the beam search execution determination unit 16a determines "Yes" in the determination processing of step Se8, the beam search execution determination unit 16a reads the average reception power value included in the data indicating the detection results, adds a margin to the read average reception power value, and calculates a threshold for "distributed antenna ID#4" (step Se9). The beam search execution determination unit 16a determines whether the reception power value included in the feedback signal exceeds the threshold calculated for the source antenna ID (here, "distributed antenna ID#4") included in the feedback signal (step Se10 when k=4).

When the beam search execution determination unit 16a determines that the reception power value included in the feedback signal exceeds the threshold calculated for the source antenna ID included in the feedback signal (step Se10, Yes), then the processing proceeds to step Se5. On the other hand, if the beam search execution determination unit 16a determines that the reception power value included in the feedback signal does not exceed the threshold calculated for the source antenna ID included in the feedback signal (step Se10, No), then the processing proceeds to step Se3.

As a result, in the second embodiment, when the beam search execution determination unit 16a determines to cause any of the distributed antenna devices 30-1 to 30-4 to perform a partial beam search, If the reception power value included in the feedback signal acquired through the partial beam search is approximately equal to the past average reception power value of the distributed antenna devices 30-1 to 30-4 targeted for the partial beam search, the beam indicated by the beam ID included in the feedback signal can be searched as the best beam of the distributed antenna devices 30-1 to 30-4 corresponding to the source antenna ID included in the feedback signal. The beam search execution determination unit 16a can add data related to the beam to the beam combination history table 140a. On the other hand, if the reception power value included in the feedback signal acquired through the partial beam search is not approximately equal to the past average reception power value of the distributed antenna devices 30-1 to 30-4 targeted for the partial beam search, the beam search execution determination unit 16a causes the distributed antenna devices 30-1 to 30-4 corresponding to the source antenna ID included in the feedback signal to perform an all-beam search. If the beam search execution determination unit 16 can acquire a feedback signal through the all-beam search, it will be possible to search for the best beam for the distributed antenna devices 30-1 to 30-4 targeted for the all-beam search. If it is not possible to acquire the feedback signal, it will not be possible to search for the best beam for the distributed antenna devices 30-1 to 30-4 targeted for the all-beam search. Therefore, in the second embodiment, in addition to the effects achieved by the communication control device 10 of the first embodiment, when performing a partial beam search, the best beam can be searched more accurately than in the first embodiment.

### (Supplementary Form)

In the first and second embodiments described above, processing for searching the transmitting-side beam in the distributed antenna devices 30-1 to 30-4, the digital signal processing device 20, and the communication control devices 10 and 10a is shown. For example, if the wireless communication systems 1 and 1a are FDD-like systems that use different frequencies for transmission and reception, the terminal device 40 on the receiving side needs to perform processing for searching for a receiving-side beam. The processing of searching for the receiving-side beam is performed, for example, as follows. The terminal device 40 on the receiving side transmits a signal requesting a reception beam search procedure to each of the distributed antennas 31-1 to 31-4 on the transmitting side. When the digital signal processing device 20 receives the signal requesting a reception beam search procedure via the distributed antenna devices 30-1 to 30-4, the digital signal processing device 20 transmits signals periodically to the distributed antenna devices 30-1 to 30-4 through the distributed antennas 31-1 to 31-4 included in the distributed antennas. The terminal device 40 switches the direction of receiving-side beams formed by the plurality of terminal antennas 41-1 to 41-M, and receives signals periodically transmitted by the distributed antennas 31-1 to 31-4. The terminal device 40 measures the reception power of the received signal. As a result, the terminal device 40 can select a receiving-side beam by determining which direction of the receiving-side beams formed by the terminal antennas 41-1 to 41-M has the best reception power value. Note that when each of the distributed antenna devices 30-1 to 30-4 periodically transmits a signal through the distributed antennas 31-1 to 31-4 provided in each distributed antenna device, the terminal device 40 may receive the signal requesting the reception beam search procedure and select the receiving-side beam without transmitting the request signal. The mechanisms of the first and second embodiments described above may also be applied to this processing of selecting the receiving-side beam. Conversely, even in a configuration in which the terminal device 40 searches for the transmitting-side beam, and the distributed antenna devices 30-1 to 30-4, the digital signal processing device 20, and the communication control devices 10 and 10a search for the receiving-side beam, the above-described mechanisms of the first and second embodiments may also be applied.

In the first and second embodiments described above, the terminal device 40 may measure the reception power and select the best beam based on the reception power value obtained by the measurement. Here, the reception power value is an example, and the terminal device 40 may measure other indicators indicating reception quality such as a carrier-to-noise ratio and a signal-to-noise ratio, and select the best beam based on the value indicating the measured reception quality.

In the first and second embodiments described above, the terminal device 40 selects the best beams for the distributed antenna devices 30-1 to 30-4 based on the plurality of beam search signals transmitted by the distributed antennas 31-1 to 31-4. On the other hand, the communication control devices 10 and 10a may select the best beams for the distributed antenna devices 30-1 to 30-4. For example, the terminal device 40 does not include the best beam selection unit 45, and the beam search signal receiving unit 44 outputs all the read data as one set of data to the feedback signal generation unit 46 in the processing of step Stb3 in Fig. 7. The feedback signal generation unit 46 generates one feedback signal that includes the source antenna ID that is common to all of the one set of data, a plurality of beam IDs included in the one set of data, and the reception power value corresponding to the beam ID. The beam combination history generation units 13 and 13a, the candidate beam detection units 15 and 15a, and the beam search execution determination units 16 and 16a can select the best beams for the distributed antenna devices 30-1 to 30-4 corresponding to the source antenna ID included in the feedback signal based on a combination of the plurality of beam IDs included in the received one feedback signal and the reception power values corresponding to the plurality of beam IDs.

In the first and second embodiments described above, the operator designates the timing of starting the beam combination generation processing in step S1 and the timing of starting the beam search processing in step S2 by operating the communication control devices 10 and 10a. On the other hand, when the beam combination generation processing in step S1 is started by the operator operating the communication control device 10, after the processing in step S1, the beam combination history generation unit 13 may start the candidate beam detection unit 15 so that the beam search processing in step S2 is started automatically without operator's operation.

In the first and second embodiments described above, the beam search processing in step S2 may be started without performing the beam combination generation processing in step S1. In this case, in the state before the beam search processing is started, no record exists in the beam combination history tables 140 and 140a of the beam combination history storage units 14 and 14a. Therefore, since the candidate beam detection units 15 and 15a cannot detect the candidate beam, the all-beam search processing of steps Sb1 and Sb2 in Fig. 10 and steps Sc3 and Sc4 in Fig. 11 in the first embodiment and steps Sd1 and Sd2 in Fig. 15 and steps Se3 and Se4 in Fig. 16 in the second embodiment is mainly performed. By repeating the all-beam search processing in the beam search processing, records are stored in the beam combination history tables 140 and 140a of the beam combination history storage units 14 and 14a, and the partial beam search processing is gradually performed. Therefore, in this case, the communication control devices 10 and 10a do not need to be provided with the beam combination history generation units 13 and 13a. Therefore, it is possible to store a number of records sufficient for reducing the number of beam searches without reducing the transmission capacity when performing the beam search processing without generating records indicating the history of beam combinations in advance.

In the first and second embodiments described above, the beam search signal receiving unit 44 of the terminal device 40 performs the processing of step Stb3 after the timer expires, as shown in the flowchart of Fig. 7. On the other hand, the beam search signal receiving unit 44 may perform the processing of step Stb2 without waiting for the timer to expire when it can be determined that the beam search signal receiving unit 44 has received all beams carrying a beam search signal transmitted by the distributed antenna devices 30-1 to 30-4 corresponding to one transmitting antenna ID, as shown below. For example, it is assumed that the numbers of beams that can be transmitted by the distributed antenna devices 30-1 to 30-4 are all the same number, and this number is known. In this case, each time the beam search signal receiving unit 44 receives a beam search signal output from the digital signal processing unit 43, the beam search signal receiving unit 44 counts the number of received beam search signals for each source antenna ID included in the beam search signal. Each time the number is counted, the beam search signal receiving unit 44 determines whether the number counted for each source antenna ID matches the known number of beams that can be transmitted by the distributed antenna devices 30-1 to 30-4. It is assumed that the beam search signal receiving unit 44 determines that the number counted for any one of the source antenna IDs matches the known number of beams that can be transmitted by the distributed antenna devices 30-1 to 30-4. In this case, it can be considered that the beam search signal receiving unit 44 has received all the beam search signals transmitted by the distributed antenna devices 30-1 to 30-4 corresponding to the source antenna ID. Therefore, the processing in step Stb3 can be performed without waiting for the expiration of the timer started in association with the source antenna ID.

In the first and second embodiments described above, when the beam search execution instruction unit 11 generates a plurality of beam search instruction signals corresponding to one distributed antenna ID, the beam search execution instruction unit 11 may add the number of generated beam search instruction signals, that is, the number of beams generated by the distributed antennas 31-1 to 31-4 corresponding to the distributed antenna ID, and the transmission timing which is the interval of transmitting beams to the beam search instruction signal to be first output to the digital signal processing device 20 among the plurality of generated beam search instruction signals. Here, the transmission timing may be a time appropriately determined in the wireless communication system 1, or may be a time determined in specifications or the like. In this case, when the digital signal processing device 20 receives the beam search instruction signal including the number of beams, transmission timing, distributed antenna ID, and beam ID, the digital signal processing device 20 generates the beam search signal including the number of beams, the transmission timing, the source antenna ID, and the beam ID from the received beam search instruction signal. Since the digital signal processing device 20 outputs the generated beam search signals to the main devices 32-1 to 32-4 corresponding to the source antenna IDs in the order of generation, the beam search signal including the number of beams and the transmission timing will reach the terminal device 40 first. In the processing of step Sta5, the beam search signal receiving unit 44 of the terminal device 40 can calculate the time to be set in the timer based on the number of beams and the transmission timing included in the received beam search signal and set the calculated time on the timer. By doing this, the terminal device 40 can know the number of beams transmitted by one of the distributed antenna devices 30-1 to 30-4 in the beam search period when the first beam search signal corresponding to the one of the distributed antenna devices 30-1 to 30-4 is received. Thus, a more appropriate time can be set on the timer, and the time required for beam search processing can be reduced.

In the second embodiment described above, in the processing of step Sd4 in Fig. 15, the candidate beam detection unit 15a detects the reception power values written in the locations of the same elements of the beam combination history table 140a together with the detected candidate beam ID and calculates the average reception power value. On the other hand, the average reception power value may be calculated by the following procedure. For example, in the processing of step Sd4 in Fig. 15, the candidate beam detection unit 15a detects only the candidate beam ID, generates data indicating the detection results including the detected candidate beam ID, the distributed antenna ID to be processed, and the data indicating the detection reference beam, and outputs the data to the beam search execution determination unit 16a. For example, after the processing of step Se7 in Fig. 16, the beam search execution determination unit 16a may detect the reception power values written in the locations of the same elements together with the candidate beam ID based on the distributed antenna ID included in the data indicating the detection results and the data indicating the detection reference beam and calculate the average reception power value. By doing this, the process of detecting the same candidate beam ID from the beam combination history table 140a is performed in the two processes of step Sd4 and step Se7. The average reception power value calculation processing may be performed only when a determination of "Yes" is obtained in the determination processing of step Se2. In the processing of step Se8, the average reception power value can be calculated using the time taken until the feedback signal is received, and the threshold can be calculated from the calculated average reception power value.

In the first and second embodiments described above, the terminal device 40 is equipped with a plurality of terminal antennas 41-1 to 41-M, but it may be equipped with one terminal antenna. In this case, if the distributed antenna devices 30-1 to 30-4 become the transmitting side and the terminal device 40 becomes the receiving side, MISO (Multiple Input Single Output) will be performed. If the distributed antenna devices 30-1 to 30-4 become the receiving side and the terminal device 40 becomes the transmitting side, SIMO (Single Input Multiple Output) will be performed. Further, when the terminal device 40 is equipped with one terminal antenna, site diversity may be performed such that one of the distributed antenna devices 30-1 to 30-4 with the best reception power value is adaptively selected from the plurality of candidate distributed antenna devices 30-1 to 30-4 and wireless communication is performed.

In the configurations of the first and second embodiments described above, in the processing of step Sc9 shown in Fig. 11 and step Se10 shown in Fig. 16, determination processing is performed to determine whether the reception power value exceeds a threshold. However, the present invention is not limited to the embodiment, and the determination processing of "whether it exceeds" is just an example, and depending on how the threshold is determined, it may be replaced with determination processing whether the reception power value is equal to or higher than the threshold.

In the first and second embodiments described above, the communication control devices 10 and 10a may include the digital signal processing device 20 therein. The beam search execution instruction unit 11 and the feedback signal receiving unit 12 of the communication control devices 10 and 10a may be provided in the digital signal processing device 20.

In the first and second embodiments described above, when performing an all-beam search, the beam search signal is transmitted in all beam directions. On the other hand, when performing an all-beam search, for example, a two-step beam search may be applied such that the first step involves performing a rough beam search using a beam with a wide beam width in the first step and the second step involves performing a precise beam search in the range selected in the first step using a beam with a narrow beam width. If the location information of the terminal device 40 is known, the beam search may be performed by focusing on the periphery of the direction in which the terminal device 40 is present. Alternatively, the beam search may be performed only around the beams that have been connected to the terminal device 40 in advance.

In the first and second embodiments described above, when the terminal device 40 is stationary, it is conceivable that the beam combination history generation units 13 and 13a and the beam combination recording units 17 and 17a generate records with the same combination of beam IDs in a short period of time. In this case, in order to prevent records with the same combination of beam IDs from being continuously recorded in the beam combination history tables 140 and 140a, for example, the beam combination history generation units 13 and 13a, the beam combination recording units 17 and 17a store the record written most recently in the beam combination history tables 140 and 140a in the internal storage area. When a record of the same combination of beam IDs as the combination of beam IDs in the record written immediately before being stored in the internal storage area is generated within a predetermined period of time, the generated record may be discarded without being written to the beam combination history tables 140 and 140a.

The communication control devices 10 and 10a in the first and second embodiments described above may be realized by a computer. In such a case, the program for realizing this function may be recorded on a computer-readable recording medium, and the program recorded on the recording medium may be read and executed by the computer system. Note that the "computer system" mentioned herein includes an OS and hardware such as peripheral devices. In addition, the "computer-readable recording medium" refers to a portable medium such as a flexible disk, a magneto-optical disk, a ROM, or a CD-ROM or a storage device such as a hard disk that is built into the computer system. Further, the "computer-readable recording medium" may include a medium that dynamically holds the program for a short time, such as a communication line in a case where the program is transmitted via a network such as the Internet or a communication line such as a telephone line, and a medium that holds the program for a certain period of time, such as a volatile memory inside a computer system serving as a server or a client in that case. The program described above may be used to implement some of the functions described above or may also be combined with a program already recorded in the computer system to implement the above-mentioned functions, or a programmable logic device such as an FPGA (Field Programmable Gate Array) may be used to implement the functions.

Although the embodiment of the present invention has been described in detail with reference to the drawings, a specific configuration is not limited to the present embodiment. The scope of the invention is defined by the claims.

### [Industrial Applicability]

The present invention can be applied to wireless communication systems with distributed antennas.

### [Reference Signs List]

- 1: Wireless communication system
- 10: Communication control device
- 11: Beam search execution instruction unit
- 12: Feedback signal receiving unit
- 13: Beam combination history generation unit
- 14: Beam combination history storage unit
- 15: Candidate beam detection unit
- 16: Beam search execution determination unit
- 17: Beam combination recording unit
- 20: Digital signal processing device
- 30-1 to 30-4: Distributed antenna device
- 31-1 to 31-4: Distributed antenna
- 32-1 to 32-4: Main device
- 40: Terminal device

## Claims

1. A communication control method comprising:
a beam combination history generation step (S1) of recording a record indicating a combination of beam identifiers indicating beam determined to be the best for each of a plurality of distributed antennas by a terminal device among the beams used for an all-beam search performed by all the plurality of distributed antennas in each trial cycle before the beam search period in a beam combination history storage unit for each trial cycle;
a candidate beam detection step (S2) of sequentially causing each of the plurality of distributed antennas to perform an all-beam search performed by transmitting beams in all directions in which the distributed antenna can transmit beams, each of the directions being specified by a respective beam identifier, in a beam search period for searching for a beam to be used for wireless communication with a terminal device, causing the all-beam search performed by the plurality of distributed antennas for communication with the terminal device to be stopped before completion when a first beam identifier indicating a best beam is acquired by a communication control device among the beams used for the all-beam search, setting a beam identified by the acquired beam identifier and information indicating a distributed antenna that has transmitted the beam indicated by the beam identifier as a detection reference beam, and referring to the information recorded in the beam combination history storage unit, identifying a record in which the beam identifier of the detection reference beam is associated with the distributed antenna that transmitted the detection reference beam, and detecting from the beam combination history storage unit, as a candidate beam identifier for a distributed antenna that has not performed the all- beam search in the beam search period due to the stopping of the all- beam search, the beam identifier that is associated, in the identified record, with said distributed antenna that has not performed the all-beam search;
a beam search execution determination step (Sb6) of determining whether to cause the distributed antenna that has not performed the all-search in the beam search period to perform the all-beam search based on detection results in the candidate beam detection step; and
a beam combination recording step (Sb7) of generating a record indicating a combination of beam identifiers indicating a best beam for each of the plurality of distributed antennas in the beam search period and recording the generated record in the beam combination history storage unit.

2. The communication control method according to claim 1, wherein
in the beam search execution determination step (Sb6),
the distributed antenna which has not performed the all-beam search in the beam search period and for which the candidate beam identifier has not been detected in the candidate beam detection step is determined as the distributed antenna that is to perform the all-beam search, and
in the beam combination recording step (Sb7), the beam determined as the best beam for each of the plurality of distributed antennas in the beam search period is a beam determined to be the best by the terminal device among the beams transmitted by the plurality of distributed antennas which have performed the all-beam search in the beam search period.

3. The communication control method according to claim 1 or claim 2, wherein
the beam search execution determination step (Sb6) involves causing the distributed antenna for which the candidate beam identifier has been detected in the candidate beam detection step to perform a partial beam search of transmitting beams indicated by the candidate beam identifiers, and determining whether to cause the distributed antenna to perform the all-beam search based on a value indicating a reception quality of a beam determined to be the best by the terminal device among the beams used for the partial beam search and a threshold, and the beam determined to be the best beam for each of the plurality of distributed antennas in the beam search period in the beam combination recording step is a beam that is determined to be the best by the terminal device among the beams used for the partial beam search performed immediately before by the distributed antenna when it is determined in the beam search execution determination step that the distributed antenna is not to perform the all-beam search, or a beam that is determined to be the best by the terminal device among the beams used for the all-beam search performed by the distributed antenna when it is determined in the beam search execution determination step that the distributed antenna is to perform the all- beam search.

4. The communication control method according to claim 3, wherein the threshold is a predetermined value.

5. The communication control method according to claim 3, wherein
the beam combination history storage unit stores a value indicating reception quality when the terminal device receives a beam indicated by the beam identifier in association with each of the beam identifiers for each of the plurality of distributed antennas, and
the beam search execution determination step (Sb6) involves determining whether to cause the distributed antenna to perform the all-beam search based on the threshold calculated from the value indicating the reception quality associated with the candidate beam identifier in the beam combination history storage unit and a value indicating the reception quality of the beam indicated by the beam identifier.

6. A communication control device (10, 10a) comprising:
a beam combination history generation unit (13, 13a) configured to record a record indicating a combination of beam identifiers indicating beam determined to be the best for each of a plurality of distributed antennas (31) by a terminal device (40) among the beams used for an all-beam search performed by all the plurality of distributed antennas (31) in each trial cycle before the beam search period in a beam combination history storage unit (14, 14a) for each trial cycle;
a candidate beam detection unit (15, 15a) configured to sequentially cause each of the plurality of distributed antennas (31) to perform an all-beam search performed by transmitting beams in all directions in which the distributed antenna can transmit beams, each of the directions being specified by a respective beam identifier, in a beam search period for searching for a beam to be used for wireless communication with the terminal device (40), causes the all- beam search performed by the plurality of distributed antennas for communication with the terminal device to be stopped before completion when a first beam identifier indicating a best beam is acquired by the communication control device (10, 10a) among the beams used for the all-beam search, sets a beam identified by the acquired beam identifier and information indicating a distributed antenna (31) that has transmitted the beam indicated by the beam identifier as a detection reference beam, and refers to the information recorded in the beam combination history storage unit (14, 14a), identifies a record in which the beam identifier of the detection reference beam is associated with the distributed antenna that transmitted the detection reference beam, and detects from the beam combination history storage unit (14, 14a), as a candidate beam identifier of a distributed antenna (31) that has not performed the all-beam search in the beam search period due to the stopping of the all- beam search, the beam identifier that is associated, in the identified record, with said distributed antenna that has not performed the all-beam search;
a beam search execution determination unit (16, 16a) configured to determine whether to cause the distributed antenna (31) that has not performed the all-beam search in the beam search period to perform the all-beam search based on detection results from the candidate beam detection unit (15, 15a); and
a beam combination recording unit (14, 14a) configured to generate a record indicating a combination of beam identifiers indicating a best beam for each of the plurality of distributed antennas (31) in the beam search period and recording the generated record in the beam combination history storage unit (14, 14a).

7. A wireless communication system (1, 1a) comprising a terminal device (40), a plurality of distributed antenna devices (30) each including one distributed antenna (31), and a communication control device (10, 10a), wherein
the communication control device (10, 10a) includes:
a beam combination history generation unit (13, 13a) configured to record a record indicating a combination of beam identifiers indicating beam determined to be the best for each of a plurality of distributed antennas (31) by the terminal device (40) among the beams used for an all-beam search performed by all the plurality of distributed antennas (31) in each trial cycle before the beam search period in a beam combination history storage unit (14, 14a) for each trial cycle;
a candidate beam detection unit (15, 15a) configured to sequentially cause each of the plurality of distributed antennas (31) to perform an all-beam search performed by transmitting beams in all directions in which the distributed antenna can transmit beams, each of the directions being specified by a respective beam identifier, in a beam search period for searching for a beam to be used for wireless communication with the terminal device (40), causes the beam search performed by the plurality of distributed antennas for communication with the terminal device to be stopped before completion when a first beam identifier indicating a best beam is acquired by the communication control device (10, 10a) among the beams used for the all-beam search, sets a beam identified by the acquired beam identifier and information indicating a distributed antenna (31) that has transmitted the beam indicated by the beam identifier as a detection reference beam, and refers to the information recorded in the beam combination history storage unit (14, 14a), identifies a record in which the beam identifier of the detection reference beam is associated with the distributed antenna that transmitted the detection reference beam, and detects from the beam combination history storage unit (14, 14a), as a candidate beam identifier for a distributed antenna (31) that has not performed the all-beam search in the beam search period due to the stopping of the all- beam search, the beam identifier that is associated, in the identified record, with said distributed antenna that has not performed the all-beam search;
a beam search execution determination unit (16, 16a) configured to determine whether to cause the distributed antenna (31) that has not performed the all-beam search in the beam search period to perform the all-beam search based on detection results from the candidate beam detection unit (15, 15a); and
a beam combination recording unit (14, 14a) that generates a record indicating a combination of beam identifiers indicating a best beam for each of the plurality of distributed antennas (31) in the beam search period and recording the generated record in the beam combination history storage unit (14, 14a).

## Patentansprüche

1. . Kommunikationssteuerungsverfahren, umfassend:
einen Schritt zur Erzeugung einer Strahlenkombinationshistorie (S1) zur Aufzeichnung eines Datensatzes, der eine Kombination von Strahlenkennungen angibt, die einen Strahl angibt, der von einem Endgerät unter den für eine allumfassende Strahlensuche verwendeten Strahlen, die von allen der Vielzahl von verteilten Antennen in jedem Prüfzyklus vor dem Strahlensuchzeitraum in einer Strahlenkombinationshistorien-Speichereinheit für jeden Prüfzyklus durchgeführt wird, als der beste für jede von einer Vielzahl von verteilten Antennen bestimmt wurde;
einen Schritt zur Erkennung eines Kandidatenstrahls (S2) zur sequentiellen Veranlassung, dass jede der Vielzahl von verteilten Antennen eine allumfassende Strahlensuche durchführen soll, indem die Strahlen in alle Richtungen übertragen werden, in die die verteilte Antenne Strahlen übertragen kann, wobei jede der Richtungen durch eine jeweilige Strahlkennung spezifiziert ist, in einem Strahlsuchzeitraum zur Suche nach einem Strahl, der für die drahtlose Kommunikation mit einem Endgerät verwendet werden soll, zur Veranlassung, dass die durch die Vielzahl von verteilten Antennen zur Kommunikation mit dem Endgerät durchgeführte allumfassende Strahlsuche vor Abschluss gestoppt wird, wenn eine erste Strahlkennung, die einen besten Strahl anzeigt, von einer Kommunikationssteuerungsvorrichtung unter den für die allumfassende Strahlsuche verwendeten Strahlen erfasst wird, zur Festlegung eines durch die erfasste Strahlkennung identifizierten Strahls und von Informationen, die eine verteilte Antenne angeben, die den durch die Strahlkennung angegebenen Strahl übertragen hat, als Erkennungsreferenzstrahl und, unter Bezugnahme auf die in der Strahlenkombinationshistorien-Speichereinheit aufgezeichneten Informationen, zur Identifzierung eines Datensatzes, in dem die Strahlkennung des Erkennungsreferenzstrahls mit der verteilten Antenne, die den Erkennungsreferenzstrahl gesendet hat, verknüpft ist, und zur Erkennung, aus der Strahlenkombinationshistorien-Speichereinheit als Kandidatenstrahlkennung für eine verteilte Antenne, die aufgrund des Stoppens der allumfassenden Strahlsuche im Strahlsuchzeitraum die allumfassende Strahlsuche nicht durchgeführt hat, der Strahlkennung, die in dem identifizierten Datensatz mit der verteilten Antenne, die die allumfassenden Strahlsuche nicht durchgeführt hat, verknüpft ist;
einen Schritt zur Bestimmung der Ausführung der Strahlsuche (Sb6), bei dem basierend auf den Detektionsergebnissen im Schritt zur Erkennung eines Kandidatenstrahls bestimmt wird, ob veranlasst werden soll, dass die verteilte Antenne, die während des Strahlsuchzeitraums keine allumfassende Strahlsuche durchgeführt hat, die allumfassende Strahlsuche durchführen soll; und
einen Schritt zur Aufzeichnung einer Strahlkombination (Sb7) zur Erzeugung eines Datensatzes, der eine Kombination von Strahlkennungen angibt, die für jede der Vielzahl von verteilten Antennen im Strahlsuchzeitraum den besten Strahl anzeigen, und zur Aufzeichnung des erzeugten Datensatzes in der Strahlenkombinationshistorien-Speichereinheit.

2. . Kommunikationssteuerungsverfahren nach Anspruch 1, wobei
im Schritt zur Bestimmung der Ausführung der Strahlsuche (Sb6),
die verteilte Antenne, die im Strahlsuchzeitraum keine allumfassende Strahlsuche durchgeführt hat und für die im Schritt zur Erkennung eines Kandidatenstrahls keine Kandidatenstrahlkennung erkannt wurde, als die verteilte Antenne bestimmt wird, die die allumfassende Strahlsuche durchführen soll, und
im Schritt zur Aufzeichnung einer Strahlkombination (Sb7) der als bester Strahl für jede der Vielzahl von verteilten Antennen im Strahlsuchzeitraum bestimmte Strahl ein Strahl ist, der von dem Endgerät unter den von der Vielzahl von verteilten Antennen, die im Strahlsuchzeitraum die allumfassende Strahlsuche durchgeführt haben, übertragenen Strahlen als der beste bestimmt wurde.

3. . Kommunikationssteuerungsverfahren nach Anspruch 1 oder Anspruch 2, wobei
der Schritt zur Bestimmung der Ausführung der Strahlsuche (Sb6) das Veranlassen, dass die verteilte Antenne, für die im Schritt zur Erkennung eines Kandidatenstrahls eine Kandidatenstrahlkennung erkannt wurde, eine partielle Strahlsuche der durch die Kandidatenstrahlkennungen angegebenen Übertragungsstrahlen durchführen soll, sowie das Bestimmen beinhaltet, ob die verteilte Antenne eine allumfassende Strahlsuche durchführen soll, basierend auf einem Wert, der die Empfangsqualität eines Strahls angibt, der unter den für die partielle Strahlsuche verwendeten Strahlen von dem Endgerät als der beste Strahl bestimmt wurde, und einem Schwellenwert, und
der Strahl, der im Schritt zur Aufzeichnung einer Strahlkombination als bester Strahl für jede der Vielzahl von verteilten Antennen im Strahlsuchzeitraum bestimmt wurde, ein Strahl ist, der von dem Endgerät als der beste unter den Strahlen bestimmt wird, die für die unmittelbar zuvor von der verteilten Antenne durchgeführte partielle Strahlsuche verwendet wurden, wenn im Schritt zur Bestimmung der Ausführung der Strahlsuche bestimmt wird, dass die verteilte Antenne keine allumfassende Strahlsuche durchführen soll, oder ein Strahl, der von dem Endgerät als der beste unter den Strahlen bestimmt wird, die für die von der verteilten Antenne durchgeführte allumfassende Strahlsuche verwendet wurden, wenn im Schritt zur Bestimmung der Ausführung der Strahlsuche bestimmt wird, dass die verteilte Antenne die allumfassende Strahlsuche durchführen soll.

4. . Kommunikationssteuerungsverfahren nach Anspruch 3, wobei
der Schwellenwert ein vorbestimmter Wert ist.

5. . Kommunikationssteuerungsverfahren nach Anspruch 3, wobei
die Strahlenkombinationshistorien-Speichereinheit einen Wert speichert, der die Empfangsqualität angibt, wenn das Endgerät einen durch die Strahlkennung angegebenen Strahl in Verbindung mit jeder der Strahlkennungen für jede der Vielzahl von verteilten Antennen empfängt, und
der Schritt zur Bestimmung der Ausführung der Strahlsuche (Sb6) das Bestimmen beinhaltet, ob veranlasst werden soll, dass die verteilte Antenne eine allumfassende Strahlsuche durchführen soll, basierend auf dem Schwellenwert, der aus dem Wert, der die Empfangsqualität in Verbindung mit der Kandidatenstrahlkennung in der Strahlenkombinationshistorien-Speichereinheit anzeigt, und einem Wert berechnet wird, der die Empfangsqualität des durch die Strahlkennung angegebenen Strahls anzeigt.

6. . Kommunikationssteuerungsvorrichtung (10, 10a), umfassend:
eine Strahlenkombinationshistorien-Erzeugungseinheit (13, 13a), die so konfiguriert ist, dass sie einen Datensatz aufzeichnet, der eine Kombination von Strahlenkennungen angibt, welche einen Strahl angibt, der von einem Endgerät (40) unter den für eine allumfassende Strahlensuche verwendeten Strahlen, die von allen der Vielzahl von verteilten Antennen (31) in jedem Prüfzyklus vor dem Strahlensuchzeitraum in einer Strahlenkombinationshistorien-Speichereinheit (14, 14a) für jeden Prüfzyklus durchgeführt wird, als der beste für jede von einer Vielzahl von verteilten Antennen (31) bestimmt wurde;
eine Kandidatenstrahl-Erkennungseinheit (15, 15a), die so konfiguriert ist, dass sie sequentiell veranlasst, dass jede der Vielzahl von verteilten Antennen (31) eine allumfassende Strahlensuche durchführt, indem die Strahlen in alle Richtungen übertragen werden, in die die verteilte Antenne Strahlen übertragen kann, wobei jede der Richtungen durch eine jeweilige Strahlkennung spezifiziert ist, in einem Strahlsuchzeitraum zur Suche nach einem Strahl, der für die drahtlose Kommunikation mit dem Endgerät (40) verwendet werden soll, veranlasst, dass die allumfassende Strahlsuche durch die Vielzahl von verteilten Antennen zur Kommunikation mit dem Endgerät vor Abschluss gestoppt wird, wenn eine erste Strahlkennung, die einen besten Strahl anzeigt, von einer Kommunikationssteuerungseinrichtung (10, 10a) unter den für die allumfassende Strahlsuche verwendeten Strahlen erfasst wird, einen durch die erfasste Strahlkennung identifizierten Strahl und Informationen, die eine verteilte Antenne (31) angeben, die den durch die Strahlkennung angegebenen Strahl übertragen hat, als Erkennungsreferenzstrahl festlegt und unter Bezugnahme auf die in der Strahlenkombinationshistorien-Speichereinheit (14, 14a) aufgezeichneten Informationen einen Datensatz identifiziert, in dem die Strahlkennung des Erkennungsreferenzstrahls mit der verteilten Antenne, die den Erkennungsreferenzstrahl übertragen hat, verknüpft ist, und aus der Strahlenkombinationshistorie-Speichereinheit (14, 14a) als Kandidatenstrahlkennung für eine verteilte Antenne (31), die aufgrund des Stoppens der allumfassenden Strahlsuche im Strahlsuchzeitraum die allumfassende Strahlsuche nicht durchgeführt hat, die Strahlkennung erkennt, die in dem identifizierten Datensatz mit der verteilten Antenne, die die allumfassende Strahlsuche nicht durchgeführt hat, verknüpft ist;
eine Strahlsuche-Ausführungsbestimmungseinheit (16, 16a), die so konfiguriert ist, dass sie basierend auf den Detektionsergebnissen von der Kandidatenstrahl-Erkennungseinheit (15, 15a) bestimmt, ob veranlasst werden soll, dass die verteilte Antenne (31), die während des Strahlsuchzeitraums keine allumfassende Strahlsuche durchgeführt hat, die allumfassende Strahlsuche durchführen soll; und
eine Strahlkombinations-Aufzeichnungseinheit (14, 14a), die so konfiguriert ist, dass sie einen Datensatz erzeugt, der eine Kombination von Strahlkennungen angibt, die für jede der Vielzahl von verteilten Antennen (31) im Strahlsuchzeitraum den besten Strahl anzeigen, und den erzeugten Datensatz in der Strahlenkombinationshistorien-Speichereinheit (14, 14a) aufzeichnet.

7. . Drahtloses Kommunikationssystem (1, 1a), das ein Endgerät (40), eine Vielzahl von verteilten Antennengeräten (30), von denen jedes eine verteilte Antenne (31) einschließt, und eine Kommunikationssteuerungsvorrichtung (10, 10a) umfasst, wobei
die Kommunikationssteuerungsvorrichtung (10, 10a) einschließt:
eine Strahlenkombinationshistorien-Erzeugungseinheit (13, 13a), die so konfiguriert ist, dass sie einen Datensatz aufzeichnet, der eine Kombination von Strahlenkennungen angibt, welche einen Strahl angibt, der von dem Endgerät (40) unter den für eine allumfassende Strahlensuche verwendeten Strahlen, die von allen der Vielzahl von verteilten Antennen (31) in jedem Prüfzyklus vor dem Strahlensuchzeitraum in einer Strahlenkombinationshistorien-Speichereinheit (14, 14a) für jeden Prüfzyklus durchgeführt wird, als der beste für jede von einer Vielzahl von verteilten Antennen (31) bestimmt wurde;
eine Kandidatenstrahl-Erkennungseinheit (15, 15a), die so konfiguriert ist, dass sie sequentiell veranlasst, dass jede der Vielzahl von verteilten Antennen (31) eine allumfassende Strahlensuche durchführt, indem die Strahlen in alle Richtungen übertragen werden, in die die verteilte Antenne Strahlen übertragen kann, wobei jede der Richtungen durch eine jeweilige Strahlkennung spezifiziert ist, in einem Strahlsuchzeitraum zur Suche nach einem Strahl, der für die drahtlose Kommunikation mit dem Endgerät (40) verwendet werden soll, veranlasst, dass die Strahlsuche durch die Vielzahl von verteilten Antennen zur Kommunikation mit dem Endgerät vor Abschluss gestoppt wird, wenn eine erste Strahlkennung, die einen besten Strahl anzeigt, von der Kommunikationssteuerungsvorrichtung (10, 10a) unter den für die allumfassende Strahlsuche verwendeten Strahlen erfasst wird, einen durch die erfasste Strahlkennung identifizierten Strahl und Informationen, die eine verteilte Antenne (31) angeben, die den durch die Strahlkennung angegebenen Strahl übertragen hat, als Erkennungsreferenzstrahl festlegt und unter Bezugnahme auf die in der Strahlenkombinationshistorie-Speichereinheit (14, 14a) aufgezeichneten Informationen einen Datensatz identifiziert, in dem die Strahlkennung des Erkennungsreferenzstrahls mit der verteilten Antenne, die den Erkennungsreferenzstrahl übertragen hat, verknüpft ist, und aus der Strahlenkombinationshistorien-Speichereinheit (14, 14a) als Kandidatenstrahlkennung für eine verteilte Antenne (31), die aufgrund des Stoppens der allumfassenden Strahlsuche im Strahlsuchzeitraum die allumfassende Strahlsuche nicht durchgeführt hat, die Strahlkennung erkennt, die in dem identifizierten Datensatz mit der verteilten Antenne, die die allumfassende Strahlsuche nicht durchgeführt hat, verknüpft ist;
eine Strahlsuche-Ausführungsbestimmungseinheit (16, 16a), die so konfiguriert ist, dass sie basierend auf den Detektionsergebnissen von der Kandidatenstrahl-Erkennungseinheit (15, 15a) bestimmt, ob veranlasst werden soll, dass die verteilte Antenne (31), die während des Strahlsuchzeitraums keine allumfassende Strahlsuche durchgeführt hat, die allumfassende Strahlsuche durchführen soll; und
eine Strahlkombinations-Aufzeichnungseinheit (14, 14a), die einen Datensatz erzeugt, der eine Kombination von Strahlkennungen angibt, die für jede der Vielzahl von verteilten Antennen (31) im Strahlsuchzeitraum den besten Strahl angibt und den erzeugten Datensatz in der Strahlenkombinationshistorien-Speichereinheit (14, 14a) aufzeichnet.

## Revendications

1. Procédé de commande de communication comportant :
une étape de génération d'historique de combinaison de faisceaux (S1) consistant à enregistrer un enregistrement indiquant une combinaison d'identifiants de faisceau indiquant un faisceau déterminé comme étant le meilleur pour chacune d'une pluralité d'antennes distribuées par un dispositif terminal parmi les faisceaux utilisés pour une recherche tous faisceaux effectuée par l'ensemble de la pluralité d'antennes distribuées dans chaque cycle d'essai avant la période de recherche de faisceau dans une unité de stockage d'historique de combinaison de faisceaux pour chaque cycle d'essai ;
une étape de détection de faisceau candidat (S2) consistant à amener séquentiellement chacune de la pluralité d'antennes distribuées à effectuer une recherche tous faisceaux effectuée par émission de faisceaux dans toutes les directions dans lesquelles l'antenne distribuée peut émettre des faisceaux, chacune des directions étant spécifiée par un identifiant de faisceau respectif, dans une période de recherche de faisceau pour rechercher un faisceau à utiliser pour une communication sans fil avec un dispositif terminal, à amener la recherche tous faisceaux effectuée par la pluralité d'antennes distribuées pour la communication avec le dispositif terminal à être arrêtée avant l'achèvement lorsqu'un premier identifiant de faisceau indiquant un meilleur faisceau est acquis par un dispositif de commande de communication parmi les faisceaux utilisés pour la recherche tous faisceaux, à définir un faisceau identifié par l'identifiant de faisceau acquis et des informations indiquant une antenne distribuée qui a émis le faisceau indiqué par l'identifiant de faisceau comme un faisceau de référence de détection, et à se référer aux informations enregistrées dans l'unité de stockage d'historique de combinaison de faisceaux, à identifier un enregistrement dans lequel l'identifiant de faisceau du faisceau de référence de détection est associé à l'antenne distribuée qui a émis le faisceau de référence de détection, et à détecter à partir de l'unité de stockage d'historique de combinaison de faisceaux, en tant qu'identifiant de faisceau candidat pour une antenne distribuée qui n'a pas effectué la recherche tous faisceaux dans la période de recherche de faisceau en raison de l'arrêt de la recherche tous faisceaux, l'identifiant de faisceau qui est associé, dans l'enregistrement identifié, à ladite antenne distribuée qui n'a pas effectué la recherche tous faisceaux ;
une étape de détermination d'exécution de recherche de faisceau (Sb6) consistant à déterminer s'il convient d'amener l'antenne distribuée qui n'a pas effectué la recherche tous faisceaux dans la période de recherche de faisceau à effectuer la recherche tous faisceaux sur la base des résultats de détection dans l'étape de détection de faisceau candidat ; et
une étape d'enregistrement de combinaison de faisceaux (Sb7) consistant à générer un enregistrement indiquant une combinaison d'identifiants de faisceaux indiquant un meilleur faisceau pour chacune de la pluralité d'antennes distribuées dans la période de recherche de faisceau et à enregistrer l'enregistrement généré dans l'unité de stockage d'historique de combinaison de faisceaux.

2. Procédé de commande de communication selon la revendication 1, dans lequel
dans l'étape de détermination d'exécution de recherche de faisceau (Sb6),
l'antenne distribuée qui n'a pas effectué la recherche tous faisceaux dans la période de recherche de faisceau et pour laquelle l'identifiant de faisceau candidat n'a pas été détecté dans l'étape de détection de faisceau candidat est déterminée comme l'antenne distribuée qui doit effectuer la recherche tous faisceaux, et
dans l'étape d'enregistrement de combinaison de faisceaux (Sb7), le faisceau déterminé comme étant le meilleur faisceau pour chacune de la pluralité d'antennes distribuées dans la période de recherche de faisceau est un faisceau déterminé comme étant le meilleur par le dispositif terminal parmi les faisceaux émis par la pluralité d'antennes distribuées qui ont effectué la recherche tous faisceaux dans la période de recherche de faisceau.

3. Procédé de commande de communication selon la revendication 1 ou la revendication 2, dans lequel
l'étape de détermination d'exécution de recherche de faisceau (Sb6) implique d'amener l'antenne distribuée pour laquelle l'identifiant de faisceau candidat a été détecté dans l'étape de détection de faisceau candidat à effectuer une recherche partielle de faisceaux d'émission indiqués par les identifiants de faisceau candidat, et de déterminer s'il convient d'amener l'antenne distribuée à effectuer la recherche tous faisceaux sur la base d'une valeur indiquant une qualité de réception d'un faisceau déterminé comme étant le meilleur par le dispositif terminal parmi les faisceaux utilisés pour la recherche partielle de faisceaux et un seuil, et
le faisceau déterminé comme étant le meilleur faisceau pour chacune de la pluralité d'antennes distribuées dans la période de recherche de faisceau dans l'étape d'enregistrement de combinaison de faisceaux est un faisceau qui est déterminé comme étant le meilleur par le dispositif terminal parmi les faisceaux utilisés pour la recherche partielle de faisceaux effectuée immédiatement avant par l'antenne distribuée lorsqu'il est déterminé dans l'étape de détermination d'exécution de recherche de faisceau que l'antenne distribuée ne doit pas effectuer la recherche tous faisceaux, ou un faisceau qui est déterminé comme étant le meilleur par le dispositif terminal parmi les faisceaux utilisés pour la recherche tous faisceaux effectuée par l'antenne distribuée lorsqu'il est déterminé dans l'étape de détermination d'exécution de recherche de faisceau que l'antenne distribuée doit effectuer la recherche tous faisceaux.

4. Procédé de commande de communication selon la revendication 3, dans lequel
le seuil est une valeur prédéterminée.

5. Procédé de commande de communication selon la revendication 3, dans lequel
l'unité de stockage d'historique de combinaison de faisceaux stocke une valeur indiquant la qualité de réception lorsque le dispositif terminal reçoit un faisceau indiqué par l'identifiant de faisceau en association avec chacun des identifiants de faisceau pour chacune de la pluralité d'antennes distribuées, et
l'étape de détermination d'exécution de recherche de faisceau (Sb6) implique de déterminer s'il convient d'amener l'antenne distribuée à effectuer la recherche tous faisceaux sur la base du seuil calculé à partir de la valeur indiquant la qualité de réception associée à l'identifiant de faisceau candidat dans l'unité de stockage d'historique de combinaison de faisceaux et d'une valeur indiquant la qualité de réception du faisceau indiqué par l'identifiant de faisceau.

6. Dispositif de commande de communication (10, 10a), comportant :
une unité de génération d'historique de combinaison de faisceaux (13, 13a) configurée pour enregistrer un enregistrement indiquant une combinaison d'identifiants de faisceaux indiquant un faisceau déterminé comme étant le meilleur pour chacune d'une pluralité d'antennes distribuées (31) par un dispositif terminal (40) parmi les faisceaux utilisés pour une recherche tous faisceaux effectuée par l'ensemble de la pluralité d'antennes distribuées (31) dans chaque cycle d'essai avant la période de recherche de faisceau dans une unité de stockage d'historique de combinaison de faisceaux (14, 14a) pour chaque cycle d'essai ;
une unité de détection de faisceau candidat (15, 15a) configurée pour amener séquentiellement chacune de la pluralité d'antennes distribuées (31) à effectuer une recherche tous faisceaux effectuée par émission de faisceaux dans toutes les directions dans lesquelles l'antenne distribuée peut émettre des faisceaux, chacune des directions étant spécifiée par un identifiant de faisceau respectif, dans une période de recherche de faisceau pour rechercher un faisceau à utiliser pour une communication sans fil avec le dispositif terminal (40), amène la recherche tous faisceaux effectuée par la pluralité d'antennes distribuées pour la communication avec le dispositif terminal à être arrêtée avant l'achèvement lorsqu'un premier identifiant de faisceau indiquant un meilleur faisceau est acquis par le dispositif de commande de communication (10, 10a) parmi les faisceaux utilisés pour la recherche tous faisceaux, définit un faisceau identifié par l'identifiant de faisceau acquis et des informations indiquant une antenne distribuée (31) qui a émis le faisceau indiqué par l'identifiant de faisceau comme étant un faisceau de référence de détection, et se réfère aux informations enregistrées dans l'unité de stockage d'historique de combinaison de faisceaux (14, 14a), identifie un enregistrement dans lequel l'identifiant de faisceau du faisceau de référence de détection est associé à l'antenne distribuée qui a émis le faisceau de référence de détection, et détecte à partir de l'unité de stockage d'historique de combinaison de faisceaux (14, 14a), en tant qu'identifiant de faisceau candidat d'une antenne distribuée (31) qui n'a pas effectué la recherche tous faisceaux dans la période de recherche de faisceau en raison de l'arrêt de la recherche tous faisceaux, l'identifiant de faisceau qui est associé, dans l'enregistrement identifié, à ladite antenne distribuée qui n'a pas effectué la recherche tous faisceaux ;
une unité de détermination d'exécution de recherche de faisceau (16, 16a) configurée pour déterminer s'il convient d'amener l'antenne distribuée (31) qui n'a pas effectué la recherche tous faisceaux dans la période de recherche de faisceau à effectuer la recherche tous faisceaux sur la base des résultats de détection de l'unité de détection de faisceau candidat (15, 15a) ; et
une unité d'enregistrement de combinaison de faisceaux (14, 14a) configurée pour générer un enregistrement indiquant une combinaison d'identifiants de faisceau indiquant un meilleur faisceau pour chacune de la pluralité d'antennes distribuées (31) dans la période de recherche de faisceau et enregistrer l'enregistrement généré dans l'unité de stockage d'historique de combinaison de faisceaux (14, 14a).

7. Système de communication sans fil (1, 1a) comportant un dispositif terminal (40), une pluralité de dispositifs d'antenne distribuée (30) incluant chacun une antenne distribuée (31), et un dispositif de commande de communication (10, 10a), dans lequel
le dispositif de commande de communication (10, 10a) comprend :
une unité de génération d'historique de combinaison de faisceaux (13, 13a) configurée pour enregistrer un enregistrement indiquant une combinaison d'identifiants de faisceaux indiquant un faisceau déterminé comme étant le meilleur pour chacune d'une pluralité d'antennes distribuées (31) par le dispositif terminal (40) parmi les faisceaux utilisés pour une recherche tous faisceaux effectuée par l'ensemble de la pluralité d'antennes distribuées (31) dans chaque cycle d'essai avant la période de recherche de faisceau dans une unité de stockage d'historique de combinaison de faisceaux (14, 14a) pour chaque cycle d'essai ;
une unité de détection de faisceau candidat (15, 15a) configurée pour amener séquentiellement chacune de la pluralité d'antennes distribuées (31) à effectuer une recherche tous faisceaux effectuée par émission de faisceaux dans toutes les directions dans lesquelles l'antenne distribuée peut émettre des faisceaux, chacune des directions étant spécifiée par un identifiant de faisceau respectif, dans une période de recherche de faisceau pour rechercher un faisceau à utiliser pour une communication sans fil avec le dispositif terminal (40), amène la recherche de faisceau effectuée par la pluralité d'antennes distribuées pour la communication avec le dispositif terminal à être arrêtée avant l'achèvement lorsqu'un premier identifiant de faisceau indiquant un meilleur faisceau est acquis par le dispositif de commande de communication (10, 10a) parmi les faisceaux utilisés pour la recherche tous faisceaux, définit un faisceau identifié par l'identifiant de faisceau acquis et des informations indiquant une antenne distribuée (31) qui a émis le faisceau indiqué par l'identifiant de faisceau comme un faisceau de référence de détection, et fait référence aux informations enregistrées dans l'unité de stockage d'historique de combinaison de faisceaux (14, 14a), identifie un enregistrement dans lequel l'identifiant de faisceau du faisceau de référence de détection est associé à l'antenne distribuée qui a émis le faisceau de référence de détection, et détecte à partir de l'unité de stockage d'historique de combinaison de faisceaux (14, 14a), en tant qu'identifiant de faisceau candidat pour une antenne distribuée (31) qui n'a pas effectué la recherche tous faisceaux dans la période de recherche de faisceau en raison de l'arrêt de la recherche tous faisceaux, l'identifiant de faisceau qui est associé, dans l'enregistrement identifié, à ladite antenne distribuée qui n'a pas effectué la recherche tous faisceaux ;
une unité de détermination d'exécution de recherche de faisceau (16, 16a) configurée pour déterminer s'il convient d'amener l'antenne distribuée (31) qui n'a pas effectué la recherche tous faisceaux dans la période de recherche de faisceau à effectuer la recherche tous faisceaux sur la base des résultats de détection de l'unité de détection de faisceau candidat (15, 15a) ; et
une unité d'enregistrement de combinaison de faisceaux (14, 14a) qui génère un enregistrement indiquant une combinaison d'identifiants de faisceau indiquant un meilleur faisceau pour chacune de la pluralité d'antennes distribuées (31) dans la période de recherche de faisceau et enregistre l'enregistrement généré dans l'unité de stockage d'historique de combinaison de faisceaux (14, 14a).
